# EUROPEAN PATENT APPLICATION

(11) **EP 1 501 254 A2**
(43) Date of publication of application: **26.01.2005**
(21) Application number: 04017384.1
(22) Date of filing: 22.07.2004
(51) Int. Cl.: H04L 29/06

(54) **Apparatus and method for receiving stream data**

(30) Priority: 23.07.2003 JP 2003278460
(71) Applicant: SONY CORPORATION, Tokyo (JP)
(72) Inventor: Sakoh, Noriyuki, Shinagawa-ku Tokyo (JP)
(74) Representative: Melzer, Wolfgang, Dipl.-Ing.

(57) **Abstract**

In a receiving apparatus which establishes communication connection with an external electronic device via a data bus compliant with a predetermined communication format, stream data is received regardless of the type of data, i.e., encrypted stream data, non-encrypted stream data, revoked stream data, and sends an authentication request to the external electronic device. Then, the receiving apparatus obtains information for decrypting the encrypted stream data sent from the external electronic device after succeeding authentication. This enables, in most cases, the receiving apparatus to obtain the decryption information before receiving encrypted stream data.

## Description

### BACKGROUND OF THE INVENTION

### 1. Field of the Invention

The present invention relates to a receiving apparatus that establishes a communication state with an external electronic device via a data bus compliant with a predetermined communication format. The invention also relates to a method for use in the above type of receiving apparatus, for decrypting encrypted streams transmitted from an external electronic device connected to the receiving apparatus.

### 2. Description of the Related Art

As digital data interfaces, IEEE1394 data interfaces are known. IEEE1394 data interfaces have a higher data transfer rate than, for example, small interface computer system interfaces (SCSI), and implements isochronous communication that ensures periodic transmission and reception of a required data size. Accordingly, IEEE1394 data interfaces are effective in transferring stream data, for example, AV(audio/video) stream data, in real time.

In view of the above-described background art, the following type of AV system has been proposed. Electronic devices, for example, various types of digital AV machines or personal computers, are connected with each other via a data bus compliant with prescribed data interface standards, for example, IEEE1394, so that AV data can be transmitted and received between the devices.

As the above-described AV system, the following type of system, a so-called "component AV system", can be considered. An amplifier device (sink device) is used as the main device, and various AV source output devices (source devices), for example, a compact disc (CD) player, a digital versatile disk (DVD) player, a video machine, are connected to the amplifier device via a data bus.

The sink device used in the above type of AV system serves the function of receiving AV source information transmitted from the source devices via a data bus and of outputting the source information as an audio signal to a speaker. That is, the sink device has the function of selecting one of a plurality of source devices connected to the data bus (such a function is also referred to as an "input source selecting function". This function is implemented by establishing a logical and mutual connection with a source device selected by the user.

Due to the developments of AV machines and data network systems, as described above, copying and transmission of digital data is becoming very easy, and thus, copyright protection for digital data content, for example, music and video, is becoming very important.

For conducting copyright protection for content data, various types of techniques, for example, data encryption, authentication between devices when connecting with each other, revocation of unsuitable devices in terms of copyright protection, have been proposed and put into practical use.

When connecting devices by the above-described IEEE1394 interface, in particular, between devices for transmitting and receiving audio data or video data, data transmission is conducted after authenticating the devices with each other (for example, authenticating the devices as licensed devices provided with an authenticated copyright protection function).

Additionally, five companies-digital transmission content protection (5C-DTCP) defines that, when sending digital streams, for example, super audio CD (SACD) streams, via an IEEE1394 interface, predetermined encryption processing should be performed on the SACD streams before being transmitted. Then, after conducting mutual authentication as described above, information required for decrypting the encrypted data is delivered from a source device to a sink device, thereby enabling the sink device to decrypt the encrypted data.

In this manner, unlimited transmission and copying of content data can be prevented, thereby implementing a copyright protection function.

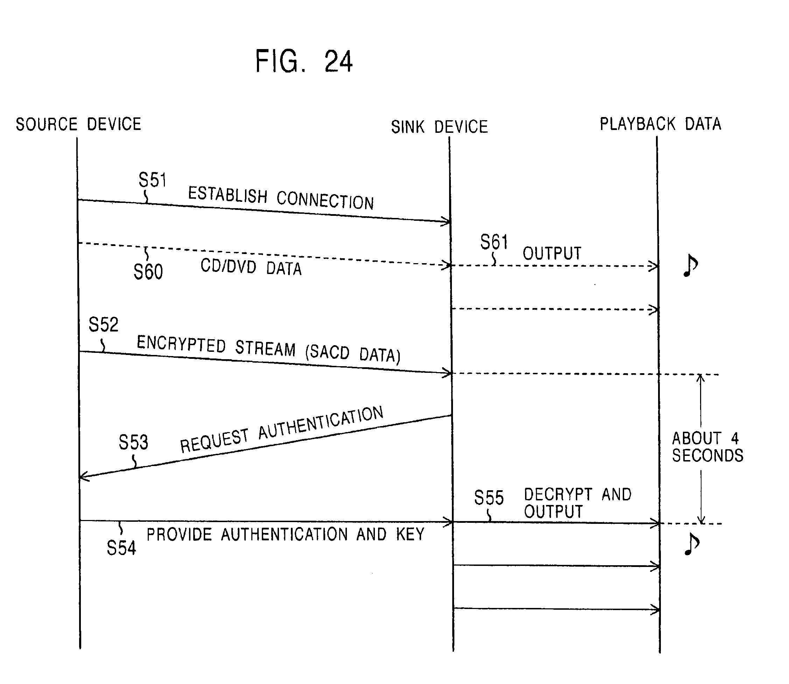

The operation performed by the above-described AV system when sending and receiving encrypted stream data is described below with reference to the flowchart of Fig. 24.

In step S51, the source device to which the encrypted stream data is output is selected, and connection is then established between the selected source device and the sink device.

In the state in which connection is established as described above, when, for example, CD quality data that does not have to be encrypted is input from the source device, as indicated by the broken line in Fig. 24, in step S60, it is immediately output form the sink device in step S61 since it does not have to be decrypted.

In contrast, when, for example, stream data which is encrypted based on prescribed standards, for example, SACD data, is input from the source device in step S52, it is necessary to obtain information for decrypting such stream data from the source device.

Accordingly, in step S53, the sink device requests the source device to conduct authentication to verify the sink device.

Then, in step S54, in response to an authentication request, authentication processing is conducted between the sink device and the source device to check the integrity of both the devices. After successfully conducting the authentication processing, information for decrypting the encrypted stream data is sent from the source device to the sink device.

Then, in step S55, the sink device decrypts the encrypted stream data and outputs the decrypted stream data as playback data.

A technique for sending information for decrypting encrypted data to a receiving apparatus after successfully conducting authentication processing is disclosed in, for example, Japanese Unexamined Patent Application Publication No. 2000-287192.

As is seen from the foregoing description, in the communication operation in this AV system, upon receiving encrypted streams from a source device, the sink device has to conduct authentication and obtain information for decrypting the encrypted streams. With this configuration, while authentication processing is being conducted, the sink device cannot decrypt stream data. This results in a mute state without sound for a while.

Normally, it takes a relatively long time, about 4 seconds, to conduct authentication processing, during which the user has to wait until sound is output.

### SUMMARY OF THE INVENTION

Accordingly, in view of the above background, it is an object of the present invention to enable a receiving apparatus to immediately decrypt and output encrypted stream data sent from an external electronic device by immediately starting authentication processing and obtaining information for decrypting the encrypted streams when connection with the external electronic device is established.

In order to achieve the above object, the present invention provides a receiving apparatus including: a receiver for receiving stream data from an external electronic device via a data bus; an authentication request unit for sending an authentication request to the external electronic device upon receiving the stream data from the external electronic device by the receiver; and a decryption information obtaining unit for obtaining information for decrypting the stream data sent from the external electronic device in response to the authentication request when the stream data is encrypted.

The present invention also provides a receiving method for receiving encrypted stream data sent from an external electronic device via a data bus. The receiving method includes: an authentication request step of sending an authentication request to the external electronic device upon receiving the encrypted stream data from the external electronic device; and a decryption information obtaining step of obtaining information for decrypting the encrypted stream data sent from the external electronic device in response to the authentication request.

According to the receiving apparatus of the present invention, upon receiving stream data from an external electronic device, the receiving apparatus sends an authentication request to the external electronic device. The receiving apparatus then obtains information for decrypting encrypted stream data sent from the external electronic device in response to the authentication request.

In most cases, since stream data first received by the receiving apparatus is data without real data, the receiving apparatus can obtain decryption information before receiving encrypted stream data.

This enables the receiving apparatus to immediately decrypt and output encrypted data when being sent from the external electronic device.

### BRIEF DESCRIPTION OF THE DRAWINGS

Fig. 1 is a schematic diagram illustrating the configuration of an AV system according to an embodiment of the present invention;
Fig. 2 is a front view illustrating the front panel of a stereo tuner receiver (STR);
Fig. 3 is a front view illustrating the front panel of an STR-compatible disk drive;
Fig. 4 is a block diagram illustrating the internal configuration of the STR;
Fig. 5 is a block diagram illustrating the internal configuration of the STR-compatible disk drive;
Fig. 6 illustrates an IEEE1394 stack model used in this embodiment;
Fig. 7 illustrates a cable structure used in IEEE1394;
Fig. 8 illustrates a signal transmission mode in IEEE1394;
Fig. 9 illustrates an IEEE1394 bus connection;
Figs. 10A, 10B, and 10C illustrate a node ID setting procedure in an IEEE1394 system;
Fig. 11 illustrates an overview of packet sending in IEEE1394;
Figs. 12A and 12B illustrate basic communication rules (transaction rules) in asynchronous communication;
Fig. 13 illustrates an addressing structure of an IEEE1394 bus;
Fig. 14 illustrates a common isochronous packet (CIP);
Fig. 15 illustrates a connection relationship defined by a plug;
Figs. 16A and 16B illustrate plug control registers;
Fig. 17 illustrates write transaction defined in asynchronous communication;
Fig. 18 illustrates a structure of an asynchronous packet (AV/C command packet);
Fig. 19 illustrates the definition of ctype/response of an asynchronous packet;
Fig. 20 illustrates the definition of subunit_type and opcode of an asynchronous packet;
Fig. 21 illustrates an example of a connection mode of an AV system according to an embodiment of the present invention;
Fig. 22 is a flowchart illustrating processing for obtaining decryption information according to an embodiment of the present invention;
Fig. 23 is a flowchart illustrating the operation of the AV system shown in Fig. 21; and
Fig. 24 is a flowchart illustrating the operation of a known AV system.

### DESCRIPTION OF THE PREFERRED EMBODIMENTS

The present invention is described in detail below with reference to the accompanying drawings through illustration of preferred embodiments.

Embodiments of the present invention are described in the following order.
1. AV system
   1-1 Overall configuration
   1-2 STR (front panel)
   1-3 STR-compatible disk drive (front panel)
   1-4 STR (internal configuration)
   1-5 STR-compatible disk drive (internal configuration)
2. IEEE1394 data communication in this embodiment
   2-1 Overview
   2-2 Stack model
   2-3 Signal transmission mode
   2-4 Bus connection between devices
   2-5 Packets
   2-6 Transaction rules
   2-7 Addressing
   2-8 Common Isochronous Packets (CIP)
   2-9 Connection management
   2-10 Commands and responses in FCP
   2-11 AV/C command packets
3. Processing for obtaining decryption information

### 1. AV system

### 1-1 Overall configuration

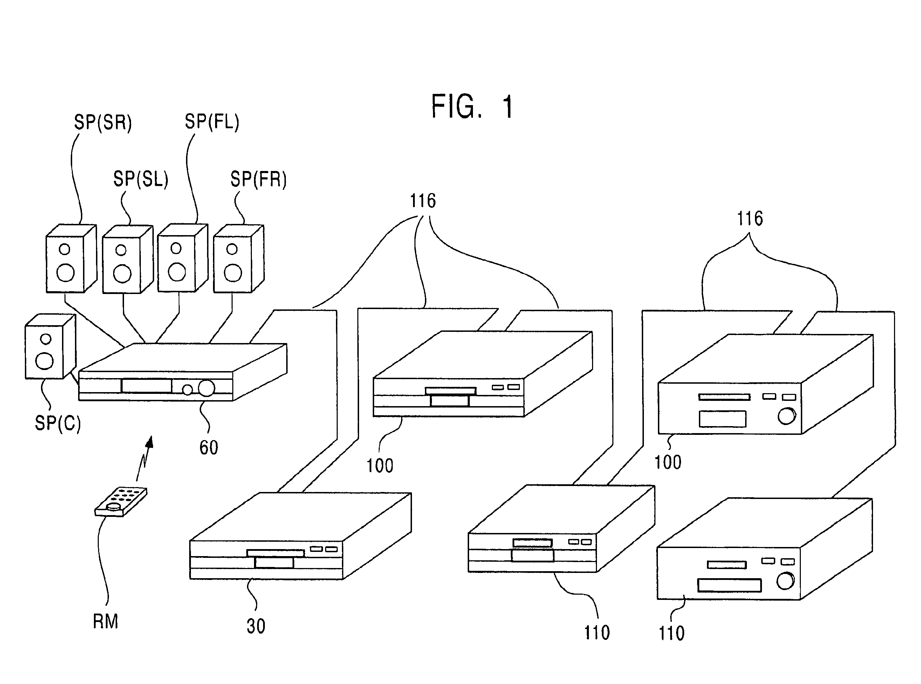

Fig. 1 illustrates an example of the configuration of an electronic device system including a receiving apparatus according to an embodiment of the present invention.

This electronic device system (AV system) is constructed by connecting a plurality of AV machines by a data bus, i.e., an IEEE1394 interface, so that they can communicate each other.

In Fig. 1, a stereo tuner receiver (STR) 60, an STR-compatible disk drive (hereinafter sometimes simply referred to as the "disk drive") 30, first devices 100 manufactured by the same manufacturer as the STR 60 and the disk drive 30, and second devices 110 manufactured by a different manufacturer from that of the STR 60 and the disk drive 30.

The STR 60 serves as the main device of the AV system shown in Fig. 1, and has main functions, such as a tuner function, an external source input selection function, and an amplifier function. The STR 60 can be connected to, for example, speakers for outputting five-channel stereo sound, i.e., a front left channel speaker SP(FL), front right channel speaker SP(FR), surround left channel speaker SP(SL), surround right channel speaker SP(SR), and a center channel speaker SP(C), as shown in Fig. 1.

Another speaker configuration, for example, a so-called "5.1 channel speaker system" including a sub woofer speaker, may be constructed.

Although a detailed configuration is described below, the STR 60 selects a broadcast signal, an analog audio signal, and a digital audio signal received by a built-in tuner, and also, selects a plurality of audio sources externally input via an IEEE1394 bus 116 and ultimately outputs the selected signal as sound from the speaker unit SP.

A remote controller RM for remotely controlling the STR 60 is also shown in Fig. 1. The STR 60 receives an operation command signal in response to an operation performed on the remote controller RM, and performs a certain operation according to the operation command signal. Although the remote controller RM corresponding to the STR 60 only is shown in Fig. 1, the other devices may also be provided with a remote controller RM.

The disk drive 30, which is manufactured by the same manufacturer as the STR 60, is disposed. The disk drive 30 can implement various system functions exhibiting high practicality by being connected to the STR 60.

The disk drive 30 serves as a disk player compatible with, for example, CDs, SACDs, video CDs (VCDs), and DVDs, and plays back data from a disk loaded in the disk drive 30.

The disk drive 30 outputs audio data obtained by playing back the disk via the IEEE1394 bus 116.

As is known, audio data played back from a CD is 16-bit-quantized linear pulse code modulation (PCM) data having a sampling frequency of 44.1 KHz.

When playing back from a DVD, not only audio data, but also video data is sometimes played back. Accordingly, the disk drive 30 is also provided with a video decoding function. Although it is not shown in Fig. 1, a display device, for example, a cathode ray tube or a liquid crystal device, may be connected to the disk drive 30 so that images played back from a DVD can be displayed.

SACDs are media using a ∑Δ-modulated one-bit digital audio signal format (direct stream digital (DSD)). This DSD signal is one-bit-quantized digital audio data having a sampling frequency 64 times as high as the sampling frequency fs (fs = 44.1 KHz) of CDs, and can play back signals exceeding the audio frequency band.

To deal with such SACDs, the disk drive 30 has a decoding function for DSD signals.

By connecting the disk drive 30 to the STR 60 via the IEEE1394 bus 116, the output from CDs, DVDs, and SACDs can be played back by the speaker system connected to the STR 60.

The first devices 100, which are manufactured by the same manufacturer as that of the STR 60 and the disk drive 30, are digital AV machines having a communication function compatible with the IEEE1394 bus 116. The first devices 100 may be a CD player, a Mini Disk (MD) recorder/player, or a digital video cassette recorder (VCR).

The first devices 100 are different from the disk drive 30 or an STR-compatible MD drive 1 in that it is not provided with a system component function implemented by, mainly, the STR 60.

However, for sending and receiving commands which become effective only within the same manufacturer (referred to as "vender dependent commands"), the first devices 100 is provided with a specific function specified by the manufacturer as well as the STR 60, the disk drive 30, and the STR-compatible MD drive 1.

If, for example, the STR 60, is manually operated to select and receive data from the first devices 100 as the audio source, the data can be monitored or recorded as sound.

The second devices 110, which are manufactured by a manufacturer different from that of the STR 60 and the disk drive 30, are also digital AV machines having a communication function compatible with the IEEE1394 bus 116. The second devices 110 may also be a CD player, an MD recorder/player, or a digital VCR. In principle, however, the second devices 110 are not compatible with the vendor dependent commands defined by the manufacturer of the STR 60.

Each AV machine shown in Fig. 1 is provided with a power receptacle for receiving power from a commercial AC power supply, though it is not shown. Alternatively, it may contain batteries if it is battery-driven. That is, each AV machine can receive power independently.

### 1-2 STR (front panel)

A description is now given of the elements on a front panel as the external configuration of the main elements of the system shown in Fig. 1, i.e., the STR 60 and the disk drive 30 forming a component AV system.

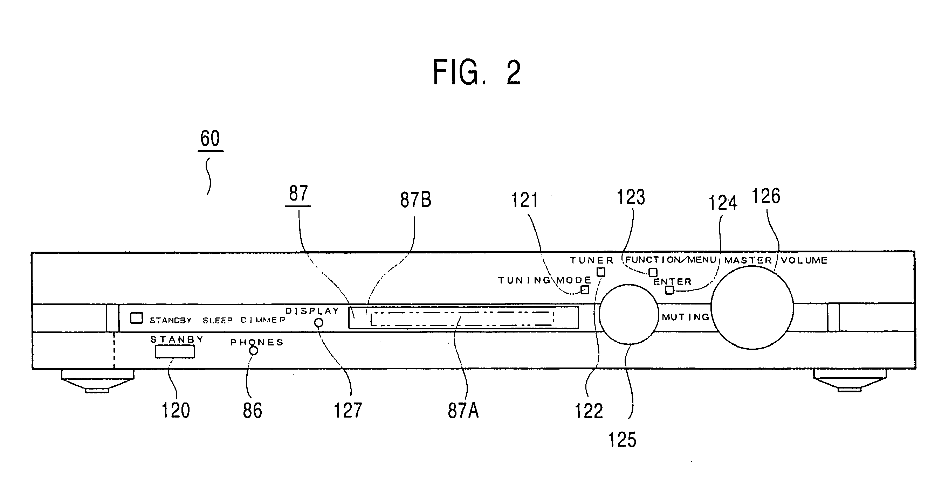

Fig. 2 illustrates elements on the front panel of the STR 60. A power supply key 120 is provided at the bottom left of the front panel. By operating this power supply key 120, the STR 60 can be powered ON/OFF. When the power is OFF, the standby power supply is operating, that is, the STR 60 is in the standby mode, which is different from the state in which the supply of a commercially AC power supply (or batteries) is interrupted. The same applies to the disk drive 30.

Although a detailed explanation is not given here, a sleep mode is also provided for the STR 60, thereby implementing power saving.

At the right of the power supply key 120, a headphone jack 86 is disposed.

A display unit 87 is disposed substantially at the center of the front panel. The display unit 87 includes a fluorescent (FL) tube display portion 87A mainly used for displaying characters (one line consisting of 14 characters). The display unit 87 also includes a segment display portion 87B around the FL tube display portion 87A, and predetermined content is displayed in the segment display portion 87B as segments, though it is not shown in Fig. 2.

A display key 127 is provided at the left of the display unit 87. The display key 127 is mainly used for changing the content displayed in the display unit 87.

At the right of the FL tube display portion 87A, a jog dial 125 is provided, and a tuning mode key 121, a tuner key 122, a function/menu key 123, and an enter key 124 are provided above the jog dial 125.

The tuning mode key 121 and the tuner key 122 are keys related to the tuner function of the STR 60, and are used for switching reception bands and tuner modes, respectively.

The function/menu key 123 is used for selecting functions and menus, and the enter key 124 is used for determining the operation.

The jog dial 125 is used together with one of the above-described keys according to a predetermined operation procedure, thereby enabling the user to perform various operations.

For example, every time the function/menu key 123 is pressed once, the content displayed in the FL tube display portion 87A changes as Function → SOUND → SETUP.

Then, for example, when the jog dial 125 is rotated while FUNCTION is being displayed in the FL tube display portion 87A, the source which is to be input and output by the STR 60 as monitor sound can be changed. In this case, the name of the input source which is currently selected according to the rotation of the jog dial 125 is displayed in the FL tube display portion 87A. According to this operation, for example, tuner sound, analog input, optical digital input, and individual sources (devices) input via the IEEE1394 bus 116 can be sequentially selected according to a predetermined order.

The tuning mode key 121, the tuner key 122, the function/menu key 123, and the enter key 124 are each provided with a light emitting diode (LED) for decoration at the back side thereof, and the LED can be switched ON or blink according to the operating state.

A volume jog 126 serves as a dial key for adjusting the audio signal level output from the STR 60, for example, the volume of sound output from the speaker unit SP.

### 1-3 STR-compatible disk drive (front panel)

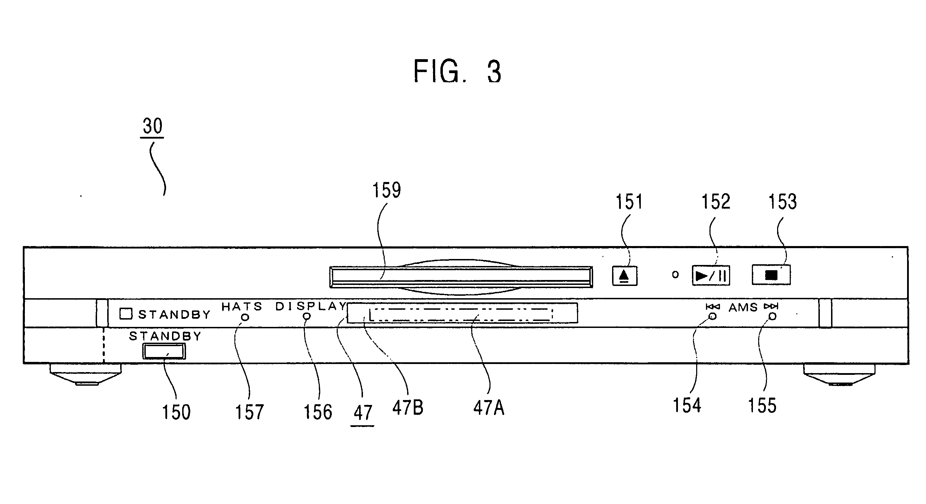

Fig. 3 illustrates element on the front panel of the disk drive 30.

Also at the bottom left of the front panel of the disk drive 30, a power supply key 150 for powering the disk drive 30 ON/OFF (standby) is provided.

At the top center of the front panel of the disk drive 30, a disk loading/unloading portion 159 is provided for loading/unloading disks, for example, CDs, SACDs, VCDs, and DVDs. For unloading, for example, a CD, loaded in the disk loading/unloading portion 159, an eject key 151 disposed at the right of the disk loading/unloading portion 159 is operated.

Below the disk loading/unloading portion 159, a display unit 47 including an FL tube display portion 47A for displaying characters (one line consisting of 14 characters) and a segment display portion 47B is disposed. In this case, in the FL tube display portion 47A, information concerning the playback status, for example, the track number or playback time of a track, which is currently played back, of a loaded CD, or text data recorded in a CD, is displayed as characters. The playback mode is indicated in the segment display portion 47B.

The content displayed in the FL tube display portion 47A can be switched by operating a display key 156 disposed at the left of the display unit 47.

At the right of the front panel, a playback/pause key 152, a stop key 153, a random-access/fast-forward key 154, and a fast-backward key 155 are provided as the keys related to the playback operation of CDs.

A High quality digital Audio Transmission System (HATS) lamp 157 for displaying ON/OFF states of a HATS function is disposed at the left side of the front panel.

The HATS is a function of preventing deterioration in the quality of digital audio signals due to jitter of a transmission clock.

For example, when transmitting audio data from the disk drive 30 to the STR 60 via the IEEE1394 bus 116, the audio data received by the STR 60 has a fluctuation in the time domain due to jitter of the transmission clock. Then, in the STR 60, the received audio data is temporarily stored in a buffer memory based on the transmission clock, and then, it is read out from the buffer memory based on a quartz clock, thereby solving the problem of a fluctuation of the audio data in the time domain. When the HATS function is ON, signals for flow control are sent and received between the disk drive 30 and the STR 60.

As is seen from the front panels shown in Figs. 2 and 3, the STR 60 and the disk drive 30 have the individual display units 87 and 47, respectively. In other words, when considering the system consisting of the STR 60 and the disk drive 30 as a single audio component system, an integrated display unit for this component system is not provided. That is, devices connected to each other via the IEEE1394 bus 116 are independent devices.

### 1-4 STR (internal configuration)

The internal configurations of the STR 60 and the disk drive 30 are described below.

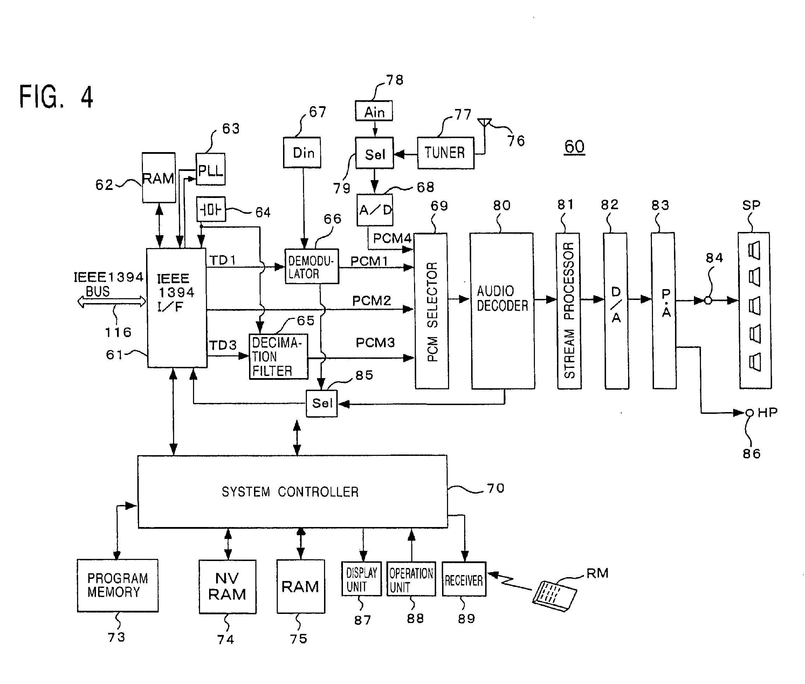

Fig. 4 is a block diagram illustrating the internal configuration of the STR 60.

In the STR 60, four types of audio sources, i.e., an audio signal sent via the IEEE1394 bus 116, an audio signal of a tuner contained in the STR 60, an external digital audio signal input from an optical digital input terminal 67, and an external analog audio signal input from an analog input terminal 78, can be input.

An IEEE1394 interface 61 is provided for sending and receiving data with external devices via the IEEE1394 bus 116. With this configuration, the STR 60 can send and receive AV data and various commands to and from external devices.

The IEEE1394 interface 61 demodulates packets received via the IEEE1394 bus 116 so as to extract data contained in the demodulated packets. The IEEE1394 interface 61 further converts the extracted data into a format compatible with internal data communication.

It is now assumed that audio data is sent from another AV machine via the IEEE1394 bus 116. The IEEE1394 interface 61 receives the audio data and demodulates the packets.

If the AV machine that has sent the audio data is the disk drive 30 and if the received audio data is played back from a CD, a VCD, or a DVD, the IEEE1394 interface 61 converts the playback data into audio data TD1 compatible with, for example, a digital audio data interface format, which is referred to as "IEC60958".

The audio data TD1 is then supplied to a demodulator 66. The demodulator 66 then performs predetermined demodulation on the input audio data TD1 according to the IEC60958 format, and outputs the demodulated audio data to a PCM selector 69 as linear PCM data (PCM1).

An external digital audio signal input from the optical digital input terminal 67 is also compliant with the IEC60958 format. The external digital audio signal is also demodulated in the demodulator 66 and is supplied to the PCM linear selector 69 as linear PCM data (PCM1).

Data played back from an SACD is transmitted after being encrypted. Upon receiving SACD playback data via the IEEE1394 bus 116, the IEEE1394 interface 61 demodulates and decrypts the packets, and then outputs a 64-fs ∑Δ-modulated one-bit-quantized DSD signal TD3 to a decimation filter 65.

The decimation filter 65 converts the DSD signal TD3 into linear PCM data (PCM3) and supplies it to the PCM selector 69.

A phase-locked loop (PLL) 63 generates a clock for demodulating packets based on a transmission clock. When the above-described HATS function is OFF, the DSD signal TD3 and IEC60958 data TD1 based on the clock generated by the PLL 63 are output.

A random access memory (RAM) 62 serves as a data buffer for storing data to be sent or received by the IEEE1394 interface 61. A clock oscillator 64 generates a quartz clock.

When audio data played back by a CD, a VCD, or a DVD is received by the IEEE1394 interface 61 while the above-described HATS function is ON, the audio playback data is temporarily stored in the RAM 62 and is read out from the RAM 62 based on the quartz clock generated by the clock oscillator 64. The IEEE1394 interface 61 is also provided with a demodulating function for IEC60958 data. When the HATS function is ON, the IEEE1394 interface 61 demodulates the data read from the RAM 62 and outputs the demodulated data to the PCM selector 69 as linear PCM data (PCM2).

When data played back from an SACD is received by the IEEE1394 interface 61 while the HATS function is ON, the data is temporarily stored in the RAM 62 and is then read out from the RAM 62 based on the quartz clock generated by the clock oscillator 64. Then, the read DSD signal TD3 is supplied to the decimation filter 65 and is converted into linear PCM data (PCM3) therein, and the data is then supplied to the PCM selector 69.

A tuner 77, which is built in the STR 60, tunes and demodulates radio broadcast waves received by an antenna 76, and outputs the resulting signal to a selector 79 as, for example, an analog audio signal.

An analog audio signal input via the analog audio signal input terminal 78 is also input into the selector 79.

Under the control of, for example, a system controller 70, the selector 79 selects the tuner 77 or the analog audio signal input terminal 78 as the input source, and supplies the analog audio signal received by the selected input source to an analog-to-digital (A/D) converter 68. The A/D converter 68 converts the input analog audio signal into linear PCM data (PCM4) and supplies it to the PCM selector 69.

The PCM selector 69 selects the linear PCM data PCM1 PCM2, PCM3, and PCM4 under the control of the system controller 70. That is, the PCM selector 69 switches the input function.

The linear PCM data selected by the PCM selector 69 is supplied to an audio decoder 80.

The audio decoder 80 is formed of a digital signal processor (DSP) and performs various types of signal processing and speaker channel separation on the audio data.

Then, the output of the audio decoder 80 is subjected to equalizing processing or other sound field processing in a stream processor 81 so that it is converted into, for example, 5-channel audio data. The 5-channel audio data is then converted into an analog audio data in a digital-to-analog (D/A) converter 82, and is amplified in a power amplifier 83.

The audio signal is then supplied to a speaker unit SP connected to a speaker connecting terminal 84 in the STR 60 and is output as sound. The speaker unit SP includes speakers SP(FL), SP(FR), SP(SL), SP(SR), and SP(C) shown in Fig. 1, and the speaker connecting terminal 84 is provided for each speaker, though only one terminal 84 is shown in Fig. 4.

The output of the power amplifier 83 is also supplied to the headphone jack 86 so that it can be output from the headphone.

When outputting audio data input into the STR 60 to an external device via the IEEE1394 bus 116, data output from the audio decoder 80 is supplied to the IEEE1394 interface 61 via a selector 85. Alternatively, the output from the demodulator 66 is supplied to the IEEE1394 interface 61 via the selector 85.

Data supplied to the IEEE1394 interface 61 has been modulated so that it can be compatible with a digital audio interface format, for example, IEC60953.

The IEEE1394 interface 61 performs predetermined processing, for example, packet formation, on the supplied data by using, for example, the RAM 62, so as to convert the data into a format compatible with IEEE1394. The IEEE1394 interface 61 then outputs the data to a target device via the IEEE1394 bus 116.

The system controller 70 includes, for example, a central processing unit (CPU), a ROM, a random access memory (RAM), and a flash memory, and performs the entire control on the operations performed by the STR 60.

In the ROM of the system controller 70, programs for implementing the various operations in the STR 60 are stored, and in the RAM of the system controller 70, data required for executing the various operations by the system controller 70 is stored.

A user interface 72 is connected to the system controller 70. The user interface 72 controls user operations and also controls data to be displayed for the user. That is, information from a receiver 89 or an operation unit 88 is input into the user interface 72. For example, radio command signals from the remote controller RM are received by the receiver 89, and are supplied to the system controller 70 via the user interface 72.

The operation unit 88 is formed of various keys disposed on the front panel shown in Fig. 2, and information concerning an operation performed on the operation unit 88 is supplied to the system controller 70 via the user interface 72.

The system controller 70 controls various elements so that a required operation in response to a command signal or operation information input as described above can be performed.

The system controller 70 also provides an instruction to the user interface 72 so that required information in response to a command signal, operation information, or the current operation status can be displayed. In response to this instruction, the user interface 72 controls the display unit 87 to display the required content. As stated above, the display unit 87 includes the FL tube display portion 87A and the segment display portion 87B.

An IEEE1394 controller 71 controls, mainly, the IEEE1394 interface 61, and more specifically, it controls communication operation performed via the IEEE1394 bus 116.

In a flash memory 93, for example, an operating program of the IEEE1394 controller 71 is stored.

A RAM 75 serves as a work area used by the IEEE1394 controller 71.

The RAM 75 and the flash memory 93 may be formed as a storage area of the IEEE1394 controller 71, which is formed as a chip, or it may be formed as a separate chip.

The IEEE1394 interface 61 also receives data, for example, commands and responses, sent from external devices, and sends commands and responses to external devices. The IEEE1394 controller 71 also performs required processing for sending and receiving commands and responses.

### 1-5 STR-compatible disk drive (internal configuration)

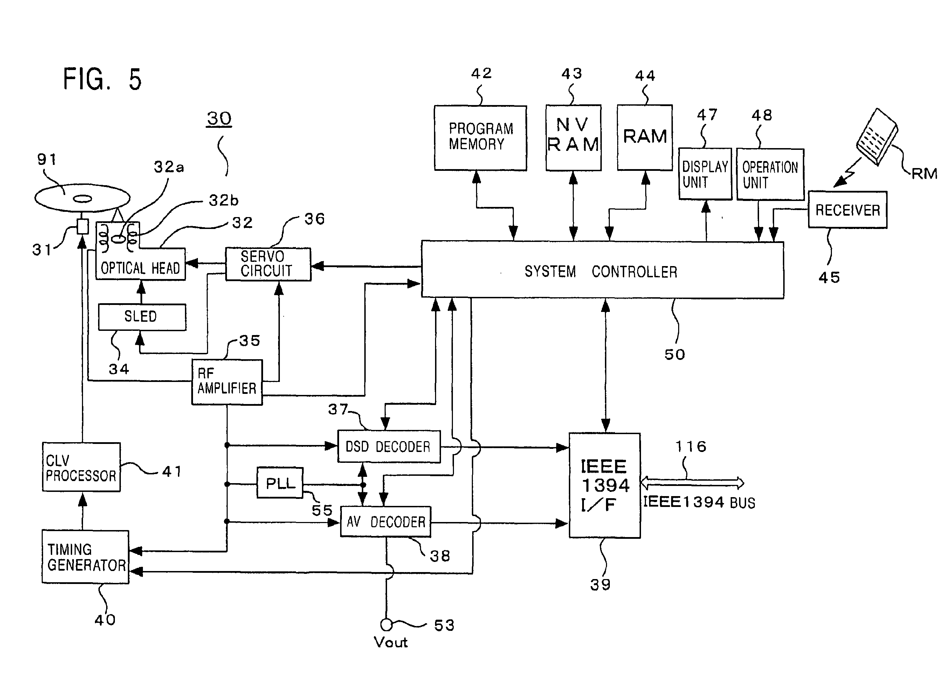

The internal configuration of the disk drive 30 is described below with reference to the block diagram of Fig. 5.

A disk 91, for example, a CD, an SACD, or a DVD, is inserted into the disk loading/unloading portion 159 disposed on the front panel of the disk drive 30 so that it can be installed at a playback position.

The disk 91 installed at the playback position is rotated at a constant linear velocity (CLV) by a spindle motor 31. Then, data recorded in the form of pits (embossed pits, phase change pits, pigmentary change pits, etc.) is read from the disk 91 by an optical head 32, and is supplied to a radio frequency (RF) amplifier 35. In the optical head 32, an objective lens 32a is held by a biaxial mechanism 32b, and can be displaced in the tracking direction and the focusing direction.

The optical head 32 is also movable in the radial direction of the disk 91 by a sled mechanism 34.

The RF amplifier 35 generates, not only a playback RF signal, but also a focusing error signal and a tracking error signal, and supplies these error signals to a servo circuit 36.

The servo circuit 36 generates a focusing drive signal, a tracking drive signal, and a sled drive signal from the focusing error signal and the tracking error signal so as to control the biaxial mechanism 32b and the sled mechanism 34. That is, the servo circuit 36 performs focusing servo control and tracking servo control.

The playback RF signal binarized in the RF amplifier 35 is also output to a timing generator 40. The timing generator 40 generates a timing signal based on the waveform timing of this playback RF signal and outputs the timing signal to a CLV processor 41. The CLV processor 41 generates a drive signal for operating the spindle motor 31 at a required CLV based on the timing signal, and supplies the drive signal to the spindle motor 31. Accordingly, spindle servo control for controlling the rotation of the disk 91 at a required CLV can be performed.

A system controller 50 controls the servo circuit 36 and the timing generator 40 so as to perform required processing, such as spindle-motor ON/OFF operation, servo setting, track jump, and access.

The playback RF signal is supplied to a DSD decoder 37 and an AV decoder 38.

The system controller 50 controls the AV decoder 38 and the DSD decoder 37 so that the AV decoder 38 is operated when playing back a CD, a VCD, or a DVD, and the DSD decoder 37 is operated when playing back an SACD.

The AV decoder 38 performs eight-to-fourteen modulation (EFM) demodulation, error correction decoding, and descrambling on the binarized CD playback signal (EFM signal). The AV decoder 38 performs EFM+ demodulation, error correction decoding, and descrambling on the binarized DVD playback signal (EFM+ signal).

Then, the AV decoder 38 decodes, for example, 16-bit-quantized audio data having a 44.1 KHz sampling format and supplies the decoded audio data to an IEEE1394 interface 39.

The AV decoder 38 also serves as a video decoder, and decodes a video signal played back from a DVD. The decoded video signal is supplied to a video monitor device (not shown) from a video output terminal 53 and is output as images.

The DSD decoder 37 decodes a binarized DSD signal played back from an SACD. The DSD signal is supplied to the IEEE1394 interface 39.

The recording surface of an SACD is a two-layered structure. In some SACDs, DSD data is recorded on one layer, and CD data is recorded on the other layer. When playing back the CD data of one of the layers, it is decoded in the AV decoder 38.

The AV decoder 38 and the DSD decoder 37 can extract control data, for example, sub codes.

For example, the AV decoder 38 can extract table of contents (TOC) information recorded in the lead-in area of the disk 91 in the form of sub codes. The sub code data and TOC are supplied to the system controller 50 and are used for various control operations.

The playback RF signal binarized in the RF amplifier 35 is also supplied to a PLL circuit 55.

The PLL circuit 55 outputs a clock synchronized with the channel bit of the input EFM signal. This clock is used as the clock for a signal processing circuit system at a stage subsequent to the DSD decoder 37 and the AV decoder 38.

The decoded audio data input into the IEEE1394 interface 39 is converted into data compatible with the IEEE1394 format and is output to an external device via the IEEE1394 bus 116.

When outputting DSD data, it is encrypted before being transmitted. That is, encrypted DSD data is output from the IEEE1394 interface 39.

Although it is not shown, a digital interface and an optical digital output terminal may be provided, in which case, audio data from the AV decoder 38 or the DSD decoder 37 can be output as digital data.

A D/A converter and an analog output terminal may be provided, in which case, decoded audio data can be converted into an analog audio signal and is output to an external device.

The system controller 50 is formed as a microcomputer including a CPU, a RAM, and a ROM, and controls the above-described various types of operations.

In the ROM of the system controller 50, programs for implementing various operations in the disk drive 30 are stored, and in the RAM of the system controller 50, data and programs required for executing various operations by the system controller 50 are stored.

When playing back data from the disk 91, management information, that is, TOC, recorded on the disk 91 has to be read. The system controller 50 determines the number of tracks in the disk 91 and the addresses of the individual tracks from this management information, and then, controls the playback operation. Accordingly, when the disk 91 is installed, the system controller 50 reads the innermost area (lead-in area) of the disk 91 in which TOC is recorded so as to extract TOC information, as discussed above. Then, the system controller 50 stores the TOC in the built-in RAM so that it can refer to this TOC when performing playback operation on the disk 91 later.

An IEEE1394 controller 51 and a user interface 52 are connected to the system controller 50 so that they can communicate each other.

The user interface 52 controls user operation and also controls data to be output and displayed for the user. That is, information from a receiver 45 and an operation unit 48 is input into the user interface 52. For example, a radio command signal sent from the remote controller RM is received by the receiver 45, and is supplied to the system controller 50 via the user interface 52.

The operation unit 48 is formed of various keys disposed on the front panel of the disk drive 30 shown in Fig. 3, and information in response to an operation performed on the operation unit 48 is supplied to the system controller 50 via the user interface 52.

The system controller 50 performs various control operations so that a required operation in response to a command signal or operation information input as described above can be performed.

The system controller 50 also provides an instruction to the user interface 52 so that required information in response to a command signal, operation information, or the current operation status can be displayed. In response to this instruction, the user interface 52 controls the display unit 47 to display the required information.

The display unit 47 displays, for example, time information, for example, the total performance time of the disk 91 and the playback or recording progress time, or name information, for example, track number, disk name, and track name, the operation status, and the operation mode.

As stated above, the display unit 47 includes the FL tube display portion 47A and the segment display portion 47B.

The IEEE1394 controller 51 controls, mainly the IEEE1394 interface 39, and more specifically, it controls communication operation performed via the IEEE1394 bus 116.

In a flash memory 54, for example, an operating program for the IEEE1394 controller 51 is stored. A RAM 44 serves as a work area used by the IEEE1394 controller 51.

As in the STR 60, the RAM 44 and the flash memory 54 may be formed as a storage area of the IEEE1394 controller 51, which is formed as a chip. Alternatively, they may be formed as a separate chip.

The IEEE1394 interface 39 receives commands and responses sent from external devices and sends commands and responses to external devices. The IEEE1394 controller 51 also executes required processing for sending and receiving commands and responses.

### 2. IEEE1394 data communication in this embodiment

### 2-1 Overview

A description is given below of data communication compliant with the IEEE1394 standards according to this embodiment.

IEEE1394 is one of the serial data communication standards. The IEEE1394 data transmission formats include an isochronous communication format in which periodic communication is conducted and an asynchronous communication format in which asynchronous communication is conducted. Generally, the isochronous communication format is used for sending and receiving data, while the asynchronous communication format is used for sending and receiving control commands. Data and control commands of the two communication formats can be sent and received by using only one cable.

The transmission mode of this embodiment is described below based on the IEEE1394 standards.

### 2-2 Stack model

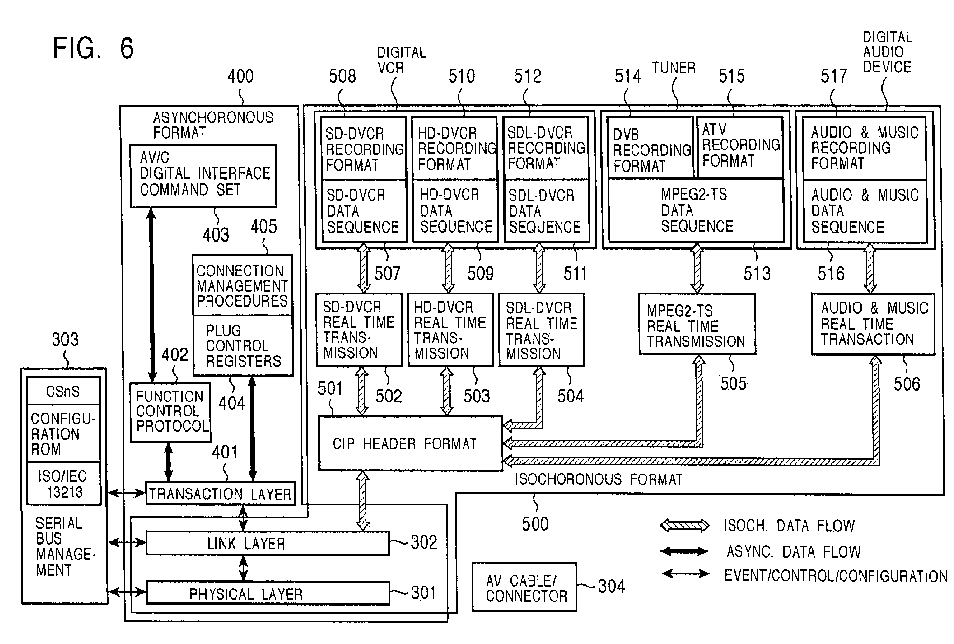

Fig. 6 illustrates an IEEE1394 stack model used in this embodiment.

The IEEE1394 format is divided into an asynchronous format (400) and an isochronous format (500).

As the layers common to the asynchronous format (400) and the isochronous format (500), a physical layer (301) is provided as the bottommost layer, and a link layer (302) is provided above the physical layer (301). The physical layer (301) is a layer for hardware, and more specifically, for transmitting signals, and the link layer (302) has a function of converting an IEEE1394 bus into an internal bus defined for each device.

The physical layer (301), the link layer (302), and a transaction layer (401), which is discussed below, are linked to a serial bus management 303 by event/control/configuration lines. An AV cable/connector 304 is a physical connector/cable for AV data transmission.

In the asynchronous format (400), the transaction layer (401) is disposed on the link layer (302). The transaction layer (401) defines data transmission protocols as IEEE1394. As the basic asynchronous transactions, write transaction, read transaction, and lock transaction are defined, as discussed below.

A function control protocol (FCP) (402) is defined above the transaction layer (401). The FCP (402) can execute command control on various AV machines by using control command defined as an AV/C command (AV/C digital interface command set) (403).

As the layer above the transaction layer (401), plug control registers (404) are defined for setting a plug (IEEE1394 logical device connection relationship) by using connection management procedures (505).

In the isochronous format (500), a common isochronous packet (CIP) header format (501) is defined above the link layer (302), and transmission protocols, such as an SD-DVCR real time transmission (502), an HD-DVCR real time transmission (503), an SDL-DVCR real time transmission (504), an MPEG2-TS real time transmission (505), an audio and music real time transmission (506), are managed by the CIP header format (501).

The SD-DVCR real time transmission (502), the HD-DVCR real time transmission (503), and the SDL-DVCR real time transmission (504) are data transmission protocols corresponding to digital VCRs.

Data handled by the SD-DVCR real time transmission (502) is formed into a data sequence (SD-DVCR data sequence (507)) obtained according to the definition of an SD-DVCR recording format (508).

Data handled by the HD-DVCR real time transmission (503) is formed into a data sequence (HD-DVCR data sequence (509)) obtained according to the definition of an HD-DVCR recording format (510).

Data handled by the SDL-DVCR real time transmission (504) is formed into a data sequence (SD-DVCR data sequence (511)) obtained by according to the definition of an SDL-DVCR recording format (512).

The MPEG2-TS real time transmission (505) is a transmission protocol for tuners corresponding to digital satellite broadcasts, and data handled by the MEPG2-TS real time transmission (505) is formed into a data sequence (MPEG2-TS data sequence (513)) obtained according to the definition of an DVB recording format (514) or an ATV recording format (515).

The audio and music real time transmission (506) is a transmission protocol for digital audio machines including the MD system of this embodiment, and data handled by the audio and music real time transmission (506) is formed into a data sequence (audio and music data sequence (516)) obtained according to the definition of an audio and music recording format (517).

### 2-3 Signal transmission mode

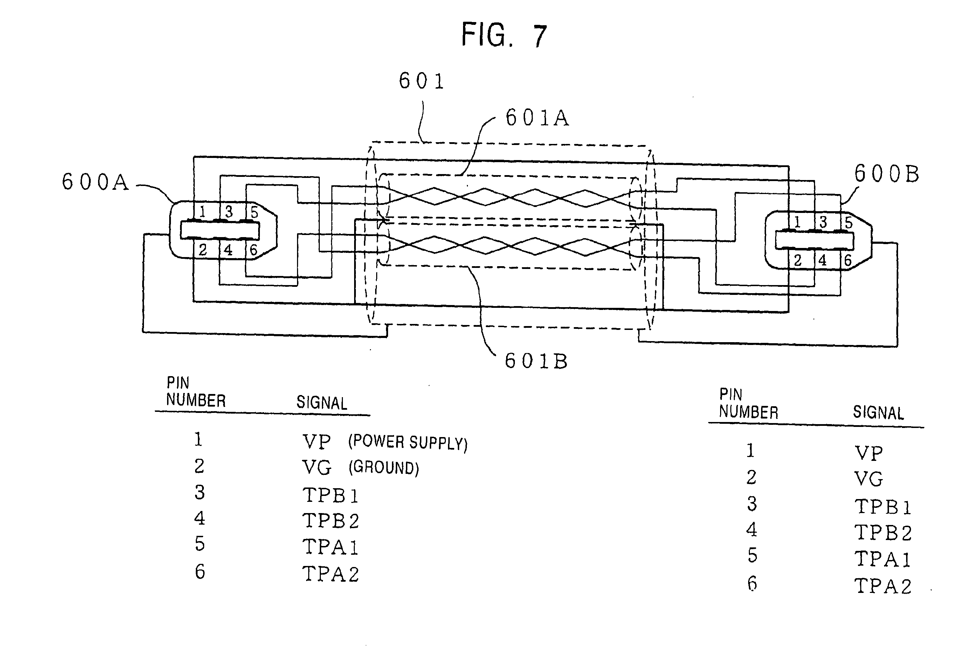

Fig. 7 illustrates an example of the structure of a cable used as an IEEE1394 bus.

In Fig. 7, a connector 600A and a connector 600B are connected with each other via a cable 601. As pin terminals for the connectors 600A and 600B, six pin terminals referred to as pin numbers 1 through 6 are used.

Pin number 1 is for power (VP), pin number 2 is for a ground (VG), pin number 3 is for TPB1, pin number 4 is for TPB2, pin number 5 is for TPA1, and pin number 6 is for TPA2.

The connection states of the pins between the connectors 600A and 600B are as follows.
Pin number 1 (VP) - pin number 1 (VP)
Pin number 2 (VG) - pin number 2 (VG)
Pin number 3 (TPB1) - pin number 5 (TPA1)
Pin number 4 (TPB2) - pin number 6 (TPA2)
Pin number 5 (TPA1) - pin number 3 (TPB1)
Pin number 6 (TPA2) - pin number 4 (TPB2)

Among the above-described pin connections, two twist cables connecting the following pins form a signal line 601A for differentially transmitting signals.
Pin number 3 (TPB1) - pin number 5 (TPA1)
Pin number 4 (TPB2) - pin number 6 (TPA2)

Two twist cables connecting the following pins form a signal line 601B for differentially transmitting signals.
Pin number 5 (TPA1) - pin number 3 (TPB1)
Pin number 6 (TPA2) - pin number 4 (TPB2)

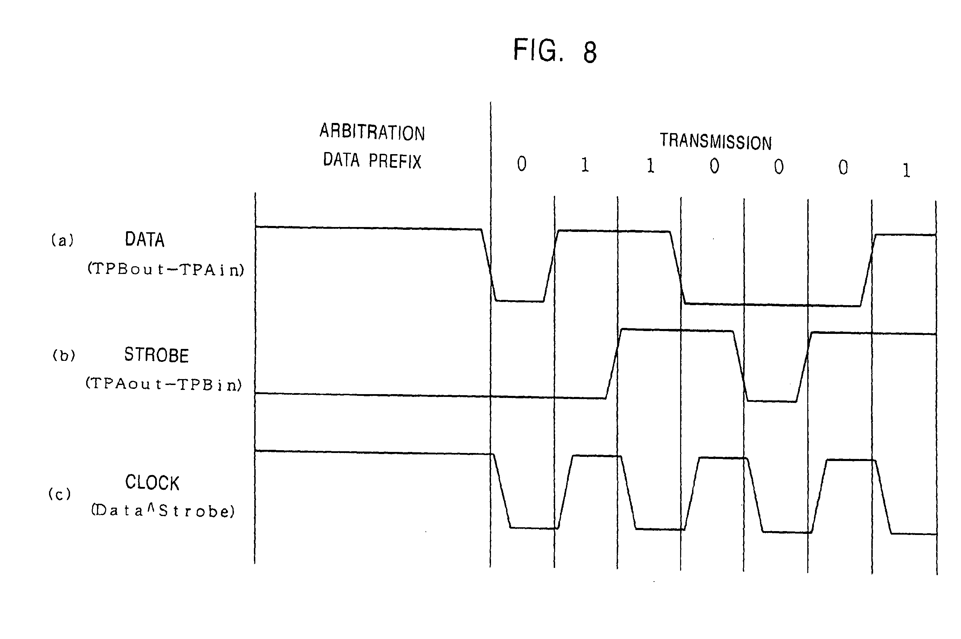

Signals transmitted through the signal lines 601A and 601B are a data signal indicated by (a) of Fig. 8 and a strobe signal indicated by (b) of Fig. 8.

The data signal indicated by (a) of Fig. 8 is output from TPB1 or TPB2 and is input into TPA1 or TPA2 by using one of the signal line 601A or 601B.

The strobe signal indicated by (b) of Fig. 8 is a signal generated by performing logical computation of the data signal and the transmission clock synchronized with the data signal, and has a frequency lower than the actual transmission clock. The strobe signal is output from TPA1 or TPA2 and is input into TPB1 or TPB2 by using the signal line 601A or 601B which is not used for transmitting the data signal.

For example, when the data signal and the strobe signal represented by (a) and (b) of Fig. 8 are input into an IEEE1394 device, predetermined logical computation is performed on the data signal and the strobe signal in this device so as to generate a transmission clock represented by (c) of Fig. 8. The transmission clock is used for signal processing on input data.

In the IEEE1394 format, by using the transmission mode configured as described above, the need to transmit a fast cycle transmission clock between devices via a cable can be eliminated, thereby improving the reliability of signal transmission.

Instead of using six pins, power (VP) and ground (VG) may be omitted in the IEEE1394 format, and only four pins forming the signal lines 601A and 601B can be used.

In the MD recorder/player 1 of this embodiment, by using only four pins, a simple system can be provided for the user.

### 2-4 Bus connection between devices

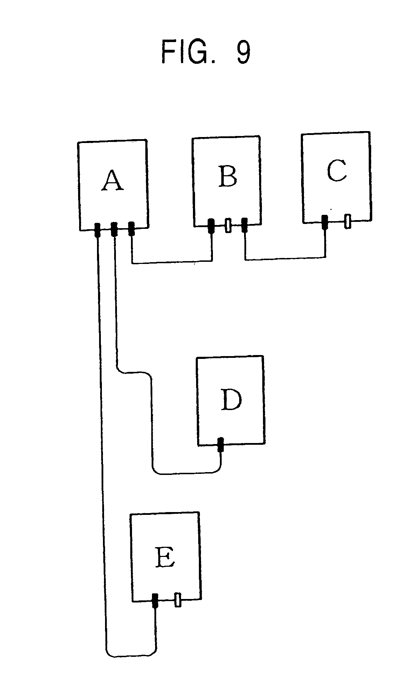

Fig. 9 schematically illustrates an example of a device connection mode by an IEEE1394 bus. In Fig. 9, devices (nodes) A, B, C, D, and E are connected to each other via an IEEE1394 bus (cables) so that they can communicate with each other.

An IEEE1394 interface enables a so-called "daisy chain connection" for connecting devices in series with each other, as devices A, B, and C in Fig. 9, by an IEEE1394 bus. In the example shown in Fig. 9, as indicated by a connection mode between device A and devices B, D, and E, a so-called "branch connection" for connecting a certain device with a plurality of devices in parallel with each other, is also possible.

In the entire system, by using the daisy chain connection and the branch connection, a maximum of 63 devices (nodes) can be connected. However, by using the daisy chain connection alone, a maximum of 16 devices (16 hops) can be connected. A terminator, which is required for SCSI, is not necessary for the IEEE1394 interface.

As stated above, in the IEEE1394 interface, devices connected by the daisy chain connection or the branch connection can communicate with each other. That is, in the case shown in Fig. 9, devices A, B, C, D, and E can communicate with each other.

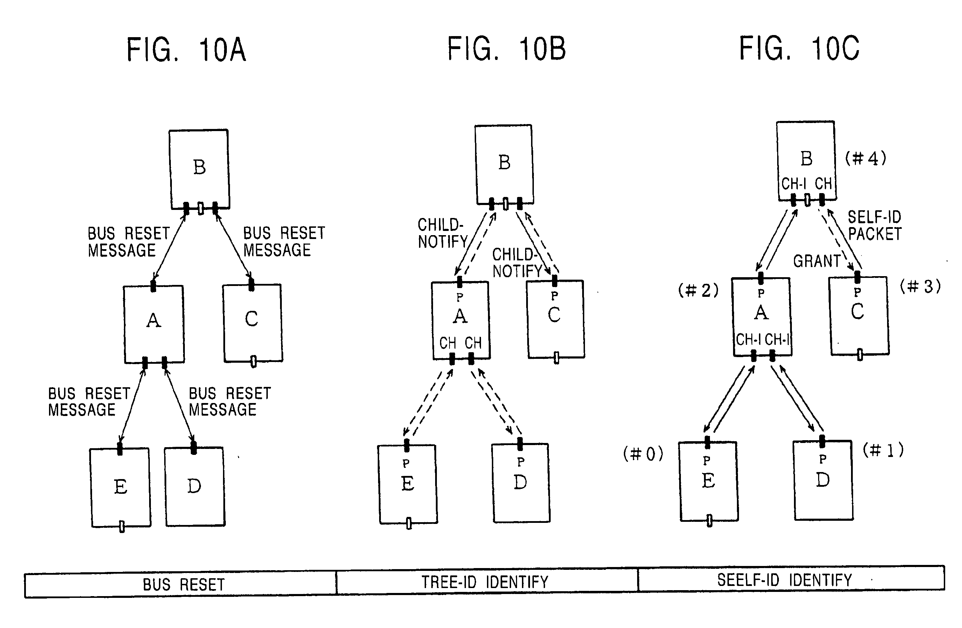

In a system in which a plurality of devices are connected via an IEEE1394 bus (hereinafter such a system is sometimes referred to as an "IEEE1394 system"), node IDs to be assigned to the devices are set. This is schematically shown in Figs. 10A, 10B, and 10C.

In the IEEE1394 system in which devices are connected in the connection mode shown in Fig. 10A, when a cable is inserted or removed, when a device in the system is turned ON/OFF, or when automatic processing is performed in a physical layer protocol (PLY), bus resetting occurs in the IEEE1394 system. Then, a bus resetting message is sent to all the devices A, B, C, D, and E via the IEEE1394 bus.

As a result of sending this bus resetting message, a parent-child relationship can be defined, as shown in Fig. 10B, in adjacent devices through communication (child-notify). That is, a tree structure is constructed for devices in the IEEE1394 system, and as a result, a root device can be defined. The root device is a device having all the devices as children (Ch). In Fig. 10B, device B is defined as the root device. In other words, the terminal of device A connected to the device B defined as the root device is defined as a parent (P).

After defining the tree structure and the root device in the IEEE1394 system as described above, self-ID packets are output from the individual devices as node-IDs, as shown in Fig. 10C. The root device sequentially grants the node-IDs so that the addresses, i.e., node-IDs, of the individual devices in the IEEE1394 system can be determined.

### 2-5 Packets

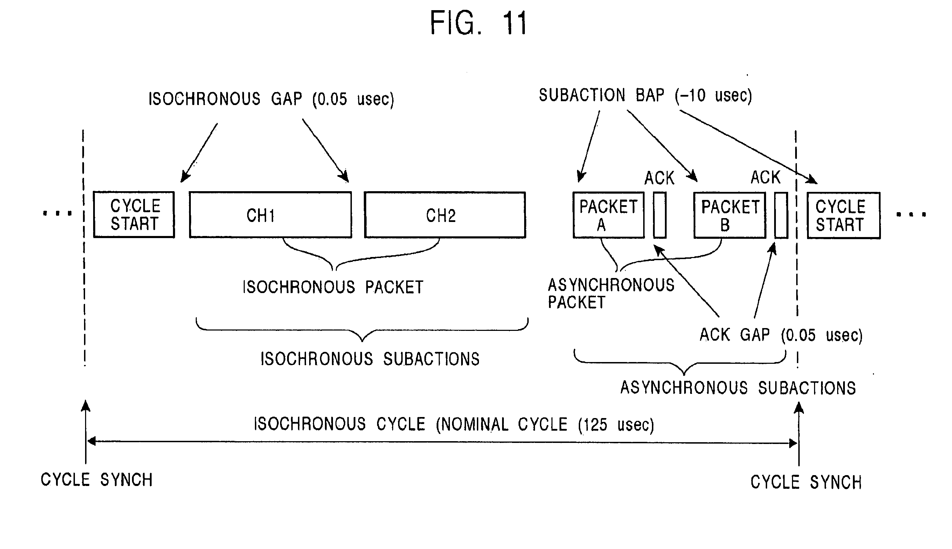

In the IEEE1394 format, isochronous cycles (nominal cycles) are repeated to perform transmission, as shown in Fig. 11. In this case, 1 isochronous cycle is 125 µsec and corresponds to 100 MHz as the band. The isochronous cycle may be other than 125 µsec. Data is formed into packets and transmitted in every isochronous cycle.

Fig. 11 shows that a cycle start packet, which indicates the start of 1 isochronous cycle, is disposed at the head of the isochronous cycle.

The cycle start packet is generated in response to an instruction from a specific device in the IEEE1394 system, which is defined as a cycle master, though a detailed explanation is not given here.

After the cycle start packet, isochronous packets are preferentially disposed. Isochronous packets are disposed by channels (isochronous subactions), as shown in Fig. 11, and are transmitted in a time division manner. Between the individual packets in the isochronous subactions, intervals referred to as "isochronous gaps" (for example, 0.05 µsec) are provided.

Thus, in the IEEE1394 system, isochronous data can be transmitted and received in multi-channels by a single transmission line.

It is now considered that compressed audio data (adaptive transform acoustic coding (ATRAC) data) compatible with the MD recorder/player 1 of this embodiment is sent in the isochronous format. If the ATRAC data is ×1 transfer rate, 1.4 Mbps, the ATRAC data having about 20 bytes is transmitted in every isochronous cycle (125 µsec) as isochronous packets, thereby ensuring time-series continuity (real time).

Though a detailed explanation is not given here, when sending ATRAC data from a certain device, the device requests an isochronous resource manager (IRM) in the IEEE1394 system to reserve the size of isochronous packets that can ensure real time transmission of the ATRAC data. The IRM then gives permission/prohibition to the requested device by monitoring the current data transmission status. If permission is given, the device can form the ATRAC data into isochronous packets and send them by using the designated channel. This is referred to as "channel allocation" in the IEEE1394 interface.

In the isochronous cycle, by using a band other than the band used by the isochronous subactions, asynchronous packets (asynchronous subactions) can be transmitted.

Fig. 11 shows that two asynchronous packets, i.e., packet A and packet B, are transmitted. After an asynchronous packet, a signal ACK (acknowledge) follows with a pause referred to as an "ack gap" (0.05 µsec). As discussed below, ACK is a signal output from a receiver (target) to inform a sender (controller) that asynchronous data has been received during the asynchronous transaction.

After and before the unit of data transmission consisting of an asynchronous packet and ACK, a pause of about 10 µsec, which is referred to as a "subaction gap", is inserted.

By sending ATRAC data in the form of isochronous packets and by sending an AUX data file which accompanies the ATRAC data in the form of asynchronous packets, the ATRAC data and the AUX data file can be apparently simultaneously transmitted.

### 2-6 Transaction rules

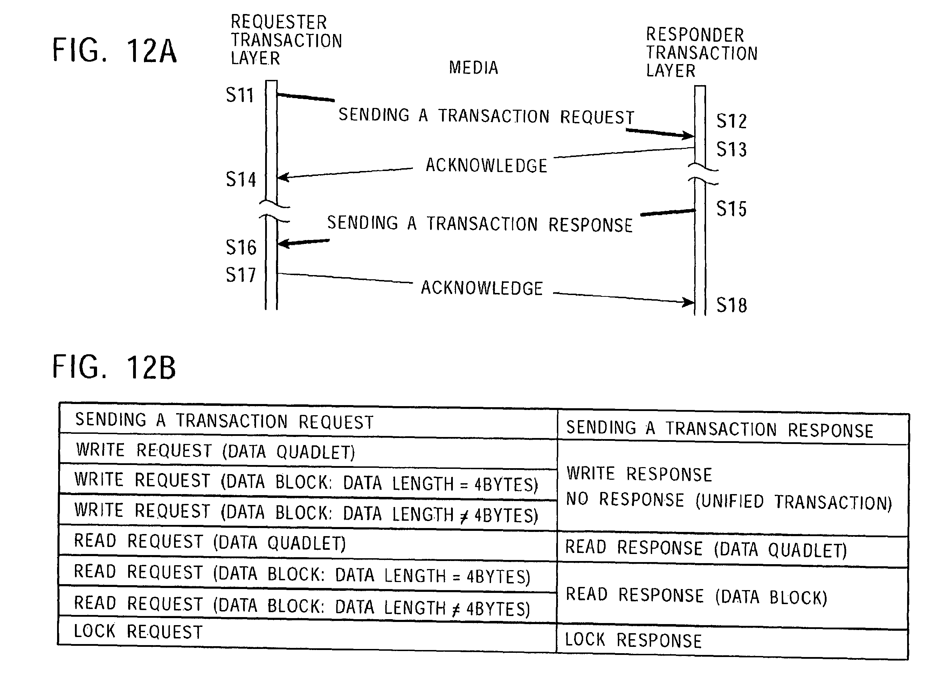

Fig. 12A is a flowchart illustrating basic communication rules (transaction rules) in asynchronous communication. The transaction rules are defined by the FCP.

In step S11, a requester (sender) sends a request to a responder (receiver). Upon receiving the request in step S12, the responder returns acknowledge to the requester in step S13. Upon receiving acknowledge, the requester can acknowledge in step S14 that the request has been received by the responder.

Thereafter, in step S15, the responder sends a response to the requester in response to the request received in step S12. Upon receiving the response in step S16, the requester returns acknowledge to the responder in step S17. Upon receiving acknowledge, the responder can acknowledge in step S18 that the response has been received by the requester.

The request transaction transmitted in Fig. 12A is largely divided into three types, i.e., a write request, a read request, and a lock request, as indicated at the left of Fig. 12B.

The write request is a command for requesting data writing. The read request is a command for data reading. The lock request is a command for swap, compare, or mask, though a detailed explanation is not given here.

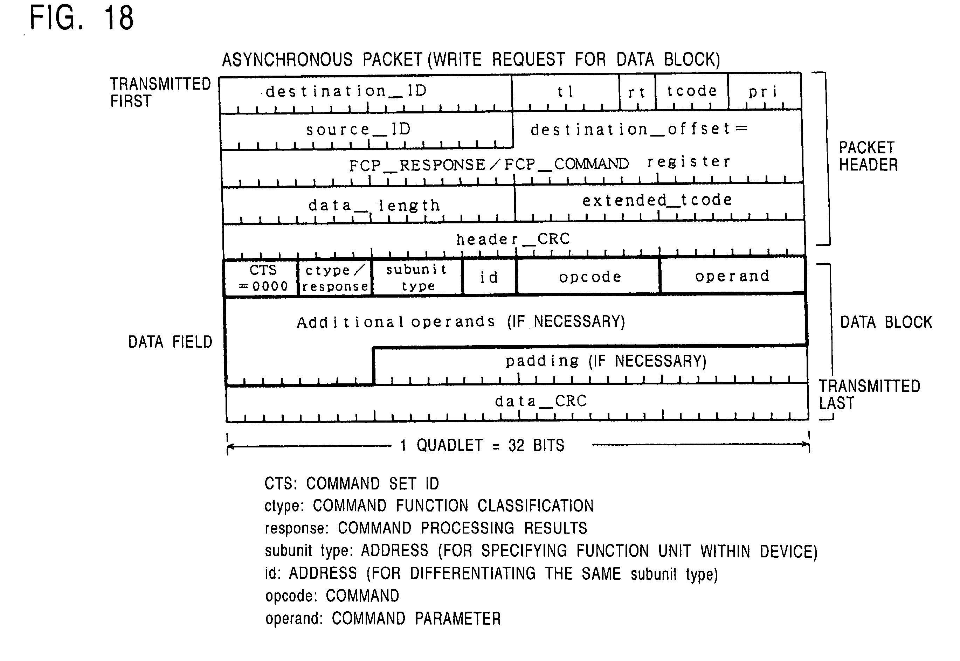

The write request can be divided into three types according to the data size of a command (operand) stored in an asynchronous packet (AV/C command packet), which is discussed below with reference to Fig. 18. The write request (data quadlet) is a request for sending commands only by the header size of an asynchronous packet. The write request (data block: data length = 4 bytes) and the write request (data block: data length ≠ 4 bytes) are requests for sending commands by adding data blocks to the header of an asynchronous packet. The second and third write requests are different in that the data size of the operand stored in the data block is 4 bytes or not.

As in the write request, the read request can be divided into three types according to the data size of the operand stored in an asynchronous packet, i.e., a read request (data quadlet), a read request (data block: data length = 4 bytes), and a read request (data block: data length ≠ 4 bytes).

The transaction response is indicated at the right side of Fig. 12B.

In response to the above-described three types of write requests, a write response or no response is defined.

In response to the read request (data quadlet), a read response (data quadlet) is defined. In response to the read request (data block: data length = 4 bytes) or the read request (data block: data length ≠ 4 bytes), a read response (data block) is defined.

In response to the lock request, a lock response is defined.

### 2-7 Addressing

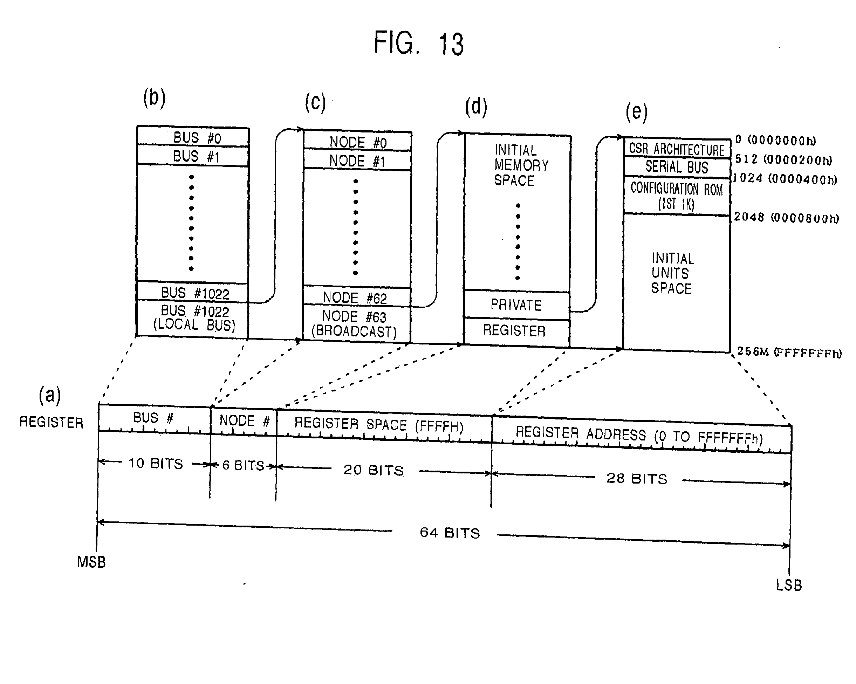

Fig. 13 illustrates an addressing structure of an IEEE1394 bus.

As indicated by (a) of Fig. 13, 64 bits are assigned to a bus address register (address space).

In the highest 10-bit region, bus IDs for identifying IEEE1394 bus lines are indicated. As represented by (b) of Fig. 13, a total of 1023 bus IDs, i.e., bus#0 through bus#1022, are set as bus IDs. The bus#1023 is defined as the local bus.

In the 6-bit region subsequent to the bus address in (a) of Fig. 13, node IDs of devices connected to the corresponding IEEE1394 bus lines represented by the bus IDs are indicated. As indicated by (c) of Fig. 13, a total of 63 node IDs, i.e., node#0 through node#62, can be identified.

A total of 16 bits representing the bus IDs and node IDs correspond to destination IDs stored in the header of an AV/C command packet, which is discussed below. By a combination of the bus ID and node ID, a device connected to a certain bus line can be specified in the IEEE1394 system.

In the 20-bit region subsequent to the node IDs, the register space is defined as indicated by (a) of Fig. 13, and in the subsequent 28-bit region, the register address is defined.

The maximum value of the register space is [F FF FFh], and the register space is represented by as shown in (d) of Fig. 13, and the register content is defined as indicated by (e) of Fig. 13. The register address is represented as shown in (e) of Fig. 13.

To simply describe the register address, by referring to the serial bus-dependent register starting at the address 512 [0 00 02 00h], information concerning the cycle time of the isochronous cycle or unoccupied channels can be obtained.

In a configuration ROM starting at the address 1024 [0 00 04 00h], information concerning a node, such as the node unique ID and subunit ID, is stored.

The node unique ID and the subunit ID are required when establishing a connection relationship between the corresponding device and the IEEE1394 bus connected to each other.

The node unique ID, which is assigned to each device, is device information having 8 bytes. Even among the same device type, there is no device having the same node unique ID.

The subunit ID has information concerning the vender name (module_vendor_ID) indicating the manufacturer name of the corresponding device (node) and the model name (model_ID) indicating the type of device.

As stated above, the node unique ID is assigned to each device, and even among the same device type, there is no device having the same node unique ID.

In contrast, the vendor name is information indicating the manufacturer name of the node, and the model name is information indicating the device type of node. Accordingly, there are devices having the same vendor name and model name.

Thus, by referring to the content of the configuration ROM, the node unique ID assigned to the corresponding node can be identified, and by referring to the subunit ID, the manufacturer and the device type of the node can be identified. Although the node unique ID is essential, the vendor name and mode name are optional and are not necessarily set in the device.

### 2-8 Common Isochronous Packet (CIP)

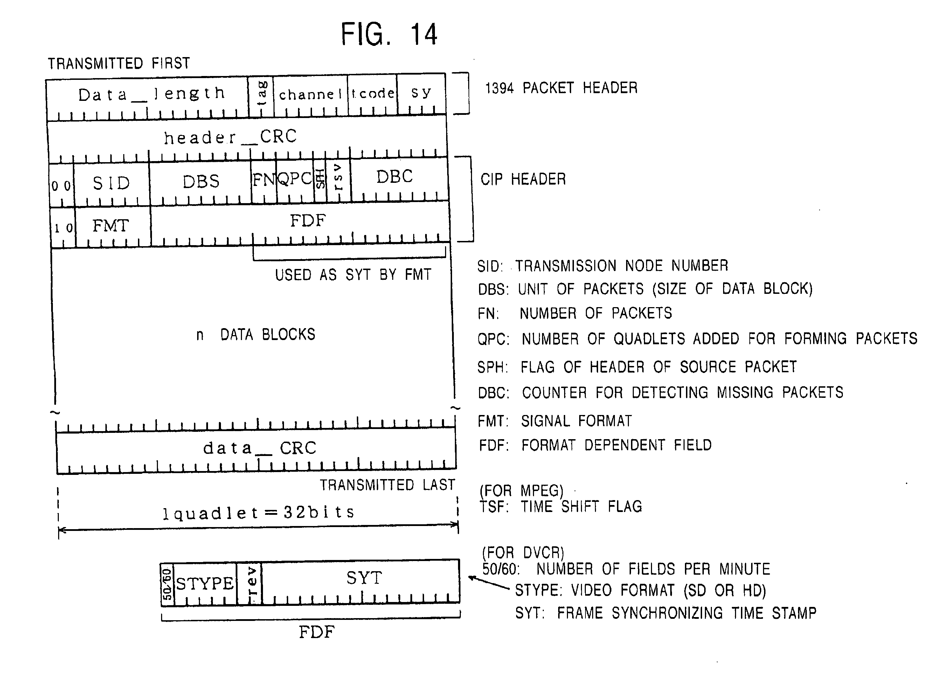

Fig. 14 illustrates the structure of a common isochronous packet (CIP), that is, the data structure of the isochronous packet shown in Fig. 11.

As discussed above, ATRAC data (audio data), which is one of the recording/playback data compatible with the MD recorder/player 1 of this embodiment, is transmitted and received in the form of isochronous packets by the IEEE1394 communication. That is, the amount of data that can be transmitted in real time is stored in isochronous packets, and are sequentially transmitted in every isochronous cycle.

The first 32 bits (one quadlet) of the CIP are used as a 1394 packet header.

In the 1394 packet header, the highest 16-bit region represents data_length; the subsequent 2-bit region designates tag, the subsequent 2-bit region designates tag; the subsequent 6-bit region represents channel; the subsequent 4-bit region represents tcode; and the subsequent 4-bit region designates sy.

Subsequent to the 1394 packet header, header_CRC is stored by using one quadlet.

Subsequent to the header_CRC, a CIP header is stored by using two quadlets.

In the highest two bits of the upper quadlet of the CIP header, '0' and '0' are stored. In the following 6-bit region, SID (sender node number) is indicated. In the following 8-bit region, DBS (data block size), which is the unit data amount for forming data into packets, is designated. In the subsequent two-bit region, FN (number of divided packets) is indicated, and in the subsequent three-bit region, QPC (the number of quadlets added for dividing data into packets) is designated.

In the following one-bit region, SPH (flag of the header of the source packet) is stored, and in the 8-bit region, DBC (the counter value for detecting missing packets) is stored.

In the highest two bits of the lower quadlet of the CIP header, '1' and '0' are stored. In the subsequent 6-bit region, FMT (signal format (transmission format)) is indicated. The type of data (data format) stored in the CIP can be identified by the value of the FMT. More specifically, the type of data, for example, MPEG stream data, audio stream data, digital video camera (DV) stream data, etc., can be identified. The data formats represented by FMT correspond to transmission protocols, such as the SD-DVCR real time transmission (502), the HD-DVCR real time transmission (503), the SDL-DVCR real time transmission (504), the MPEG2-TS real time transmission (505), and the audio and music real time transmission (506) managed by the CIP header format (501) shown in Fig. 6.

After the FMT region, a 24-bit FDF (format dependent field) region follows. The FDF is a region in which the data format shown as FMT is further classified into details. For example, if the data is audio data, the FDF indicates whether the audio data is linear audio data or musical instrument digital interface (MIDI) data.

In the case of ATRAC data, for example, the FMT indicates that the data is audio stream data, and then, the FDF indicates that the audio stream data is ATRAC data.

If the FMT indicates that the data is MPEG data, synchronizing control information referred to as a "time shift flag (TSF)" is stored in the FDF. If the FMT indicates that the data is digital video camera (DVCR) data, the FDF is defined as shown at the bottom of Fig. 14. More specifically, 50/60 (one bit) defines the number of fields per minute; STYPE (five bits) indicates whether the video format is SD or HD; and SYT designates the frame synchronizing time stamp.

After the CIP header, data defined by FMT and FDF is stored as a sequence of n data blocks. If the FMT and FDF indicate that the data stored is ATRAC data, the ATRAC data is stored as the data blocks.

After the data blocks, data_CRC is disposed.

### 2-9 Connection management

In the IEEE1394 format, the connection relationship of devices connected via an IEEE1394 bus is defined by a logical connection concept referred to as "plug".

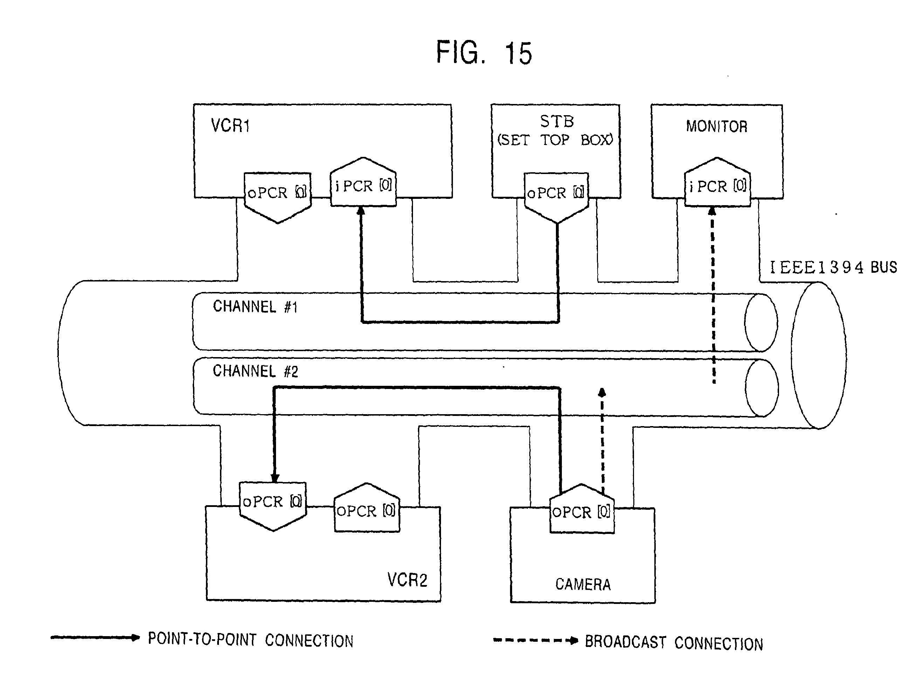

Fig. 15 illustrates an example of the connection relationship defined by the plug. In this connection relationship, a system mode in which a VCR1, a VCR2, a set-top box (STB: digital satellite broadcast tuner), a monitor device, and a digital still camera are connected to each other via an IEEE1394 bus is shown.

As the connection mode by the IEEE1394 plug, there are two modes, i.e., point-to-point connection and broadcast connection.

In the point-to-point connection, the relationship between the sender and the receiver is specified, and data transmission is performed between the sender and the receiver by using a specific channel.

In contrast, in the broadcast connection, the sender sends data without specifying the receiver or channel. The receiver receives data without identifying the sender, and performs required processing on the received data if necessary.

In the example shown in Fig. 15, as the point-to-point connection, the STB (sender) sends data to the VCR1 (receiver) by using channel#1, and the digital still camera (sender) sends data to the VCR2 (receiver) by using channel#2.

As the broadcast connection, the digital still camera (sender) sends data, and the monitor device receives the data from the digital still camera and performs required response processing.

The above-described connection mode (plug) is established by a plug control register (PCR) disposed in the address space of each device.

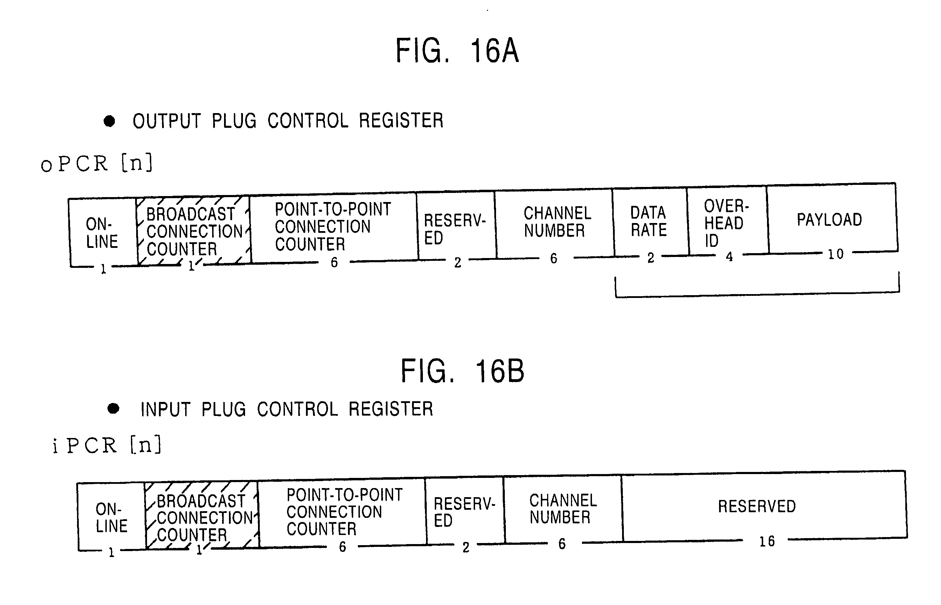

Fig. 16A illustrates the structure of an output plug control register (oPCR[n]) and Fig. 16B illustrates the structure of an input plug control register (iPCR[n]). The sizes of oPCR[n] and iPCR[n] are both 32 bits.

In the oPCR[n] shown in Fig. 16A, if 1 is stored in on-line of the highest one bit, it means that the plug is on-line in which isochronous data can be transmitted. If 1 is stored in the subsequent broadcast connection counter (one bit), data transmission is performed by broadcast connection. The subsequent point-to-point connection counter (6 bits) indicates the number of point-to-point connections linked to this plug. Then, the data can be transmitted from the highest 11th bit by using the channel represented by the channel number (6 bits).

In the iPCR[n] shown in Fig. 16B, if 1 is stored in on-line of the highest one bit, it means that the plug is on-line in which isochronous data can be received. If 1 is stored in the subsequent broadcast connection counter (one bit), data reception is performed by broadcast connection. The subsequent point-to-point connection counter (6 bits) indicates the number of point-to-point connections linked to this plug. Then, the data can be received from the 11th highest bit by using the channel represented by the channel number (6 bits).

In the broadcast connection counter of oPCR[n] and iPCR[n] shown in Figs. 16A and 16B, the number of nodes that can perform broadcast connection is stored if transmission/reception is performed by using broadcast connection.

In the point-to-point connection counter of oPCR[n] and iPCR[n] shown in Figs. 16A and 16B, the number of nodes that can perform point-to-point connection is stored if transmission/reception is performed by using point-to-point connection.

### 2-10 Commands and responses in FCP

Data transmission by asynchronous communication is defined by the FCP (402) of Fig. 6. Transactions defined by the FCP (402) are as follows.

As the FCP, the write transaction defined in asynchronous communication (see Fig. 12B) is used. Accordingly, AUX data is transmitted in this embodiment by using the write transaction in asynchronous communication according to the FCP.

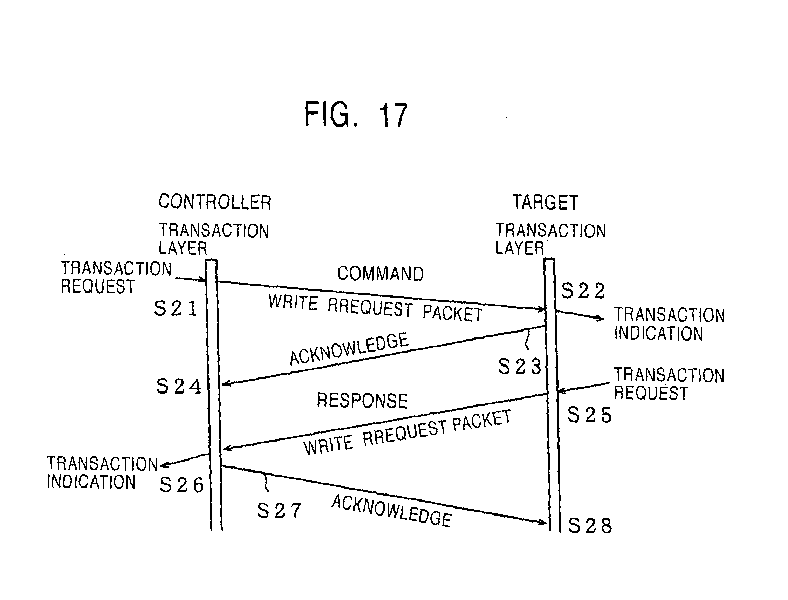

A device that supports the FCP is provided with a command/response register, and implements a transaction by writing a message into the command/response register, as described with reference to the flowchart of Fig. 17.

For performing command sending processing, in step S21, a controller generates a transaction request and sends a write request packet to a target. In step S22, the target receives the write request packet and writes data into the command/response register. Then, in step S23, the target returns acknowledge to the controller. In step S24, the controller receives this acknowledge. Steps 21 through S24 are command sending processing.

Subsequently, for response returning processing, in step S25, the target sends a write request packet. In step S26, the controller receives the write request packet and writes data into the command/response register. In step S27, the controller returns acknowledge to the target in response to the reception of the write request packet. In step S28, the target receives this acknowledge to acknowledge that the write request packet has been received by the controller.

That is, the command sending processing from the controller to the target and the response returning processing from the target to the controller form the base of data transmission (transaction) by the FCP.

### 2-11 AV/C command packets

As discussed with reference to Fig. 6, in asynchronous communication, based on the FCP, communication can be performed to various AV machines by using the AV/C command.

In asynchronous communication, three types of transactions, i.e., write transaction, read transaction, and lock transaction, are defined as discussed with reference to Fig. 12B. In practice, a write request/response packet, a read request/response packet, and a lock request/response packet corresponding to the write transaction, the read transaction, and the lock transaction, respectively, are used. In the FCP, the write transaction is used, as stated above.

Fig. 18 illustrates the format of the write request packet (asynchronous packet (write request for data block)). In this embodiment, the write request packet is used as the AV/C command packet.

In the write request packet, the first 5 quadlets (first through fifth quadlets) are used as the packet header.

The highest 16 bits of the first quadlet are used for storing destination_ID indicating the node ID of the destination of the data. In the following 6-bit region, t1 (transaction label) indicating the packet number is indicated. The subsequent two bits are rt (retry code) indicating whether the packet is to be transmitted for the first time or to be resent. The following 4 bits are tcode (transaction code) indicating the command code. Then, the subsequent 4 bits are pri(priority) indicating the priority of the packets.

In the second quadlet, the highest 16 bits are used for storing source_ID indicating the node_ID of the data sender.

The lower 16 bits of the second quadlet and the entire 48 bits of the third quadlet are used for storing destination_offset indicating the addresses of the command register (FCP_COMMAND register) and the response register (FCP_RESPONSE register).

The above-described destination_ID and the destination_offset correspond to the 64-bit address space defined in the IEEE1394 format.

In the fourth quadlet, the highest 16 bits are used for storing data_length indicating the data size of the datafield (area surrounded by the solid lines in Fig. 18).

In the subsequent lower 16-bit region, extended_tcode used for extending tcode is stored.

The 32-bit region as the fifth quadlet designates header_CRC in which CRC values for performing checksum of the packet header are stored.

From the sixth quadlet after the packet header, data blocks are disposed, and the data field is formed as the head of the data block.

In the highest 4 bits, which are the head of the data field, of the sixth quadlet, CTS (command and transaction set) is indicated. The CTS represents the ID of the command set of the write request packet, and when the CTS is set to be 0000, as shown in Fig. 18, the content indicated in the datafield is the AV/C command. That is, the write request packet is defined as the AV/C command packet. In this embodiment, since the FCP uses the AV/C command, the CTS indicates 0000.

In the 4-bit region after the CTS, ctype/response indicating ctype (command type: command function classification) or command processing result (response) is designated.

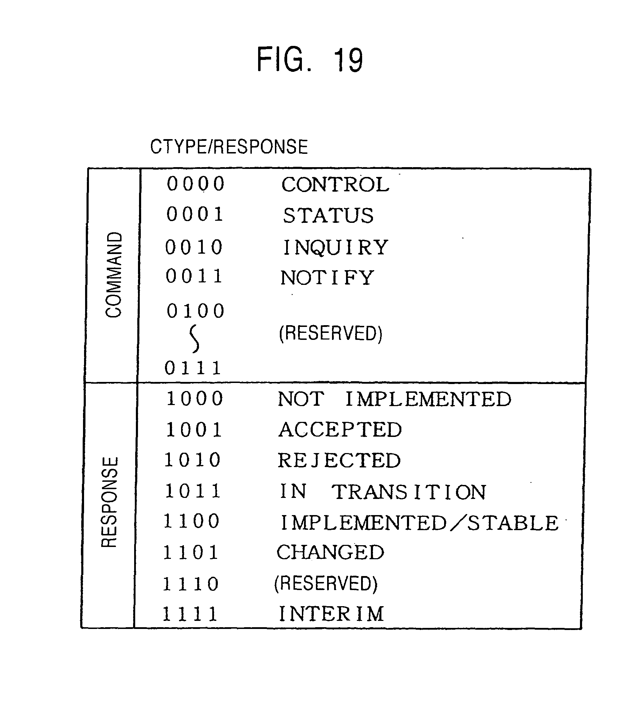

Fig. 19 illustrates the definition of the above-described ctype/response.

As the ctype (command), 0000 through 0111 can be used, 0000 is CONTROL, 0001 is STATUS, 0010 is INQUIRY, and 0011 is NOTIFY. 0100 through 0111 are currently undefined (reserved).

CONTROL is a command for externally controlling the function; STATUS is a command for externally querying about the status; INQUIRY is a command for externally querying about the presence or absence of the support for the control command; and NOTIFY is a command for externally notifying a status change.

As the response, 1000 through 1111 are used. 1000 is NOT IMPLEMENTED, 1001 is ACCEPTED, 1010 is REJECTED, 1011 is IN TRANSACTION, 1100 is IMPLEMENTED/STABLE, 1101 is CHANGED, 1100 reserved, and 1111 is INTERIM.

The type of response is changed according to the type of command. For example, in response to the CONTROL command, one of the four commands, i.e., NOT IMPLEMENTED, ACCEPTED, REJECTED, and INTERIM, is selected according to the status of the responder.

In Fig. 18, the 5-bit region subsequent to the ctype/response, subunit-type is stored. The subunit-type indicates the type of subunit (device) of the destination of COMMAND or the sender of RESPONSE. In the IEEE1394 format, the device itself is referred to as a "unit", and the type of functional device unit provided in the unit (device) is referred to as a "subunit". For example, the unit as a VCR includes two subunits, i.e., a tuner for receiving terrestrial waves and satellite broadcasts and a video cassette recorder/player.

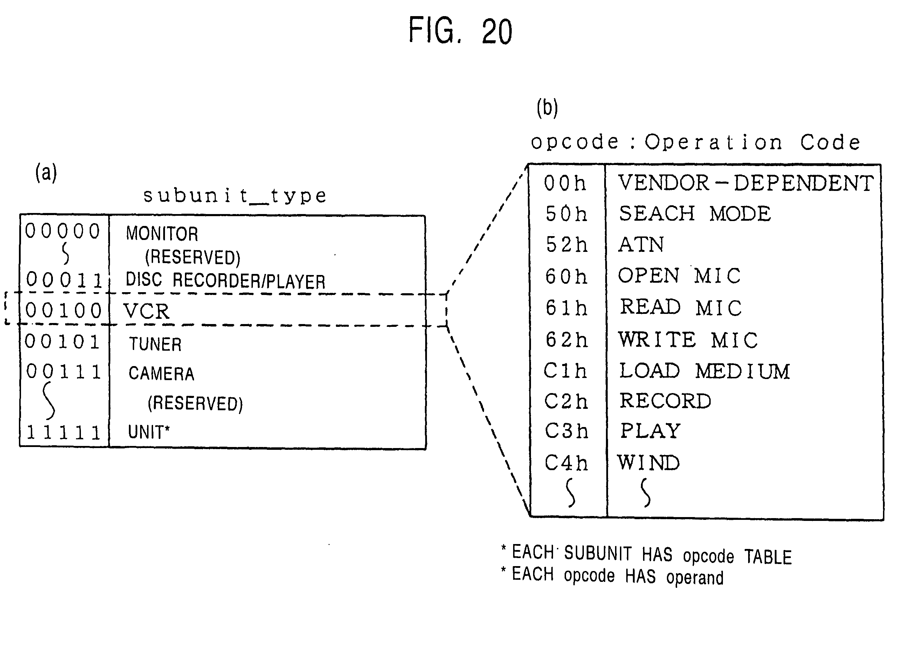

The subunit_type is defined, for example, as shown in (a) of Fig. 20. More specifically, 00000 is a monitor, 00001 through 00010 are reserved, 00011 is a disc recorder/player, 00100 is a VCR, 00101 is a tuner, 00111 is a camera, 01000 through 11110 are reserved, and 11111 is a unit without subunit.

In Fig. 18, in the three bits subsequent to the subunit_type, id (node_ID) for specifying each of a plurality of subunits of the same type is stored.

In the subsequent 8 bits, opcode is stored, and in the subsequent 8 bits, operand is stored.

The opcode is an operation code, and in the operand, information (parameters) required for the opcode is stored. The opcode is defined for each subunit and each subunit has a unique opcode list table. For example, if the subunit is a VCR, various commands, such as PLAY and RECORD, are defined in the opcode, as shown (b) of Fig. 20. The operand is defined for each opcode.

As the datafield in Fig. 18, the 32 bits in the sixth quadlet are essential, and if necessary, operands may be added (additional operands).

After the datafield, data_CRC is disposed. If necessary, padding is disposed before data_CRC.

### 3. Processing for obtaining decryption information

As discussed above, in the AV system of this embodiment, when transmitting audio data, in particular, DSD data played back from an SACD, from the disk drive 30 to the STR 60, the data is encrypted before being transmitted.

Then, the STR 60, which receives the data, receives information for decrypting the encrypted data (hereinafter referred to as "decryption information") from the disk drive 30 when successfully conducting authentication with the disk drive 30.

A description is now given of the operation performed by the STR 60 for obtaining the decryption information.

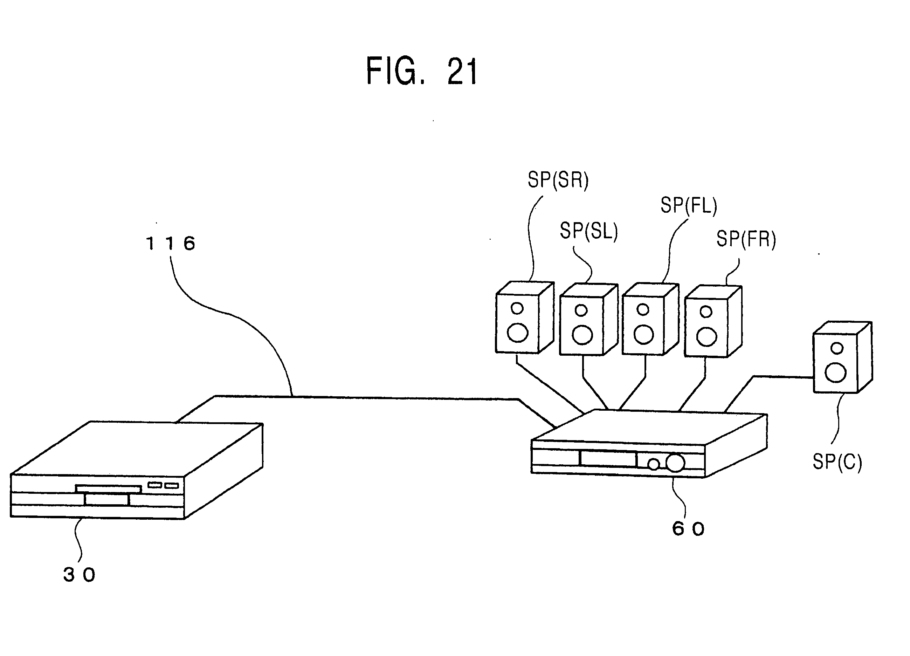

The operation for obtaining decryption information is discussed below in the context of the connection mode of an AV System shown in Fig. 21.

That is, the STR 60 to which the speakers SP(FL), SP(FR), SP(SL), SP(SR), and SP(C) are connected and the drive 30 shown in Fig. 1 are connected to each other via the IEEE1394 bus 116.

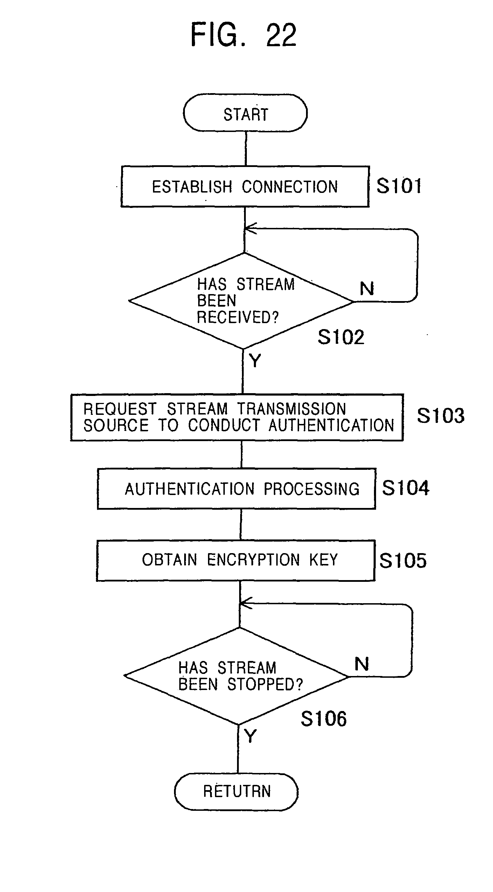

Fig. 22 is a flowchart illustrating the operation for obtaining decryption information performed by the STR 60. The operation in this flowchart is performed by the system controller 70 or the IEEE1394 controller 71 (hereinafter simply referred to as the "controller") within the STR 60.

In step S101, connection with the disk drive 30 is established by selecting the input source by using the function/menu key 123 and the jog dial 125 disposed on the front panel of the STR 60 shown in Fig. 2.

More specifically, the controller communicates with the selected disk drive 30 so as to establish connection with the disk drive 30.

Then, in step S102, the controller monitors whether stream data sent from the disk drive 30 has been received.

In this case, by establishing connection as described above, the disk drive 30 starts sending stream data in the form of isochronous packets and asynchronous packets. If the stream data has been played back in the disk drive 30, packets containing real data are sent to the STR 60. If the stream data has not been played back in the disk drive 30, packets without real data are sent to the STR 60.

In the AV system shown in Fig. 21, when outputting data to be played back in the disk drive 30 to the STR 60, the user normally first selects the source device, and then inserts a disk, or if a disk is already inserted, the user plays back the disk. Accordingly, before this operation, playback data (real data) is not sent from the disk drive 30 to the STR 60.

That is, the stream data sent from the disk drive 30 immediately after establishing connection does not contain real data unless the source selection in step S101 is performed while the data is being played back in the drive 30.

As a result, the stream data received by the STR 60 in step S102 does not contain real data (empty stream data).

If it is determined in step S102 that stream data has been received from the disk drive 30, the process proceeds to step S103. In step S103, the controller requests the disk drive 30 to conduct authentication.

In step S104, the controller conducts authentication processing with the disk drive 30. If authentication with the disk drive 30 has failed, decryption information is not sent to the STR 60, and DSD data cannot be processed by the STR 60.

If the authentication processing in step S104 has succeeded, the controller obtains decryption information from the disk drive 30 and stores it in step S105.

As a result, the STR 60 can decrypt encrypted stream data sent from the disk drive 30 based on the decryption information.

The controller then monitors in step S106 whether the supply of stream data is suspended. If the outcome of step S106 is YES, the process returns to step S101.

The reason for the suspension of the supply of the stream data may be that the disk drive 30 is turned OFF, or the cable has been inserted or removed. In this case, the decryption information for encrypting encrypted data may have been changed in the disk drive 30.

Thus, if the supply of stream data is suspended in step S106, the process returns to step S101, and thus, new decryption information can be obtained even if it is changed.

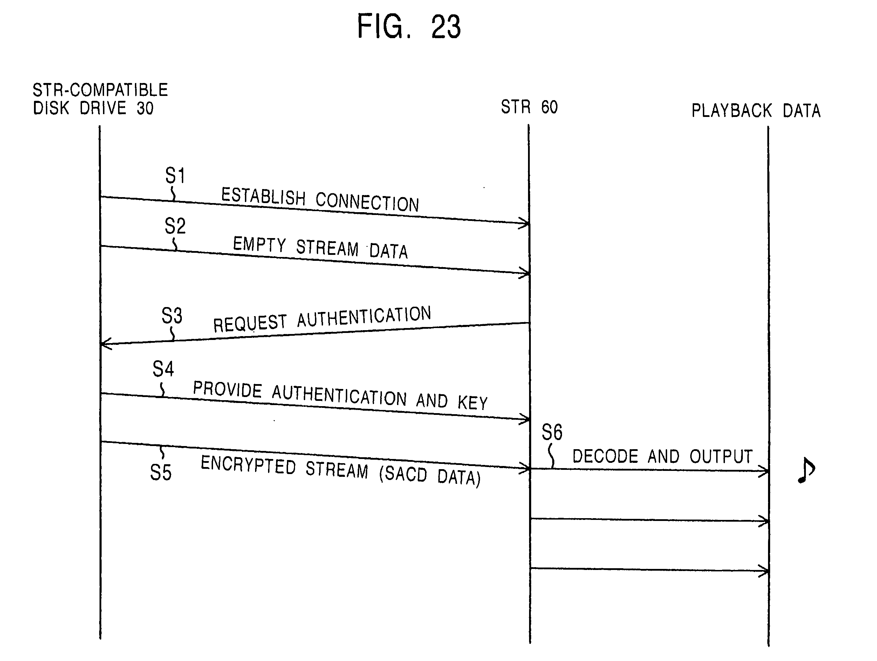

According to the processing for obtaining decryption information by the STR 60, the following operation shown in Fig. 23 is performed in the entire system shown in Fig. 21.

Step S1 of Fig. 23 corresponds to step S101 of Fig. 22, and connection between the disk drive 30 and the STR 60 is established, as discussed above. It is now assumed that the disk drive 30 is not playing back data in step S1.

Then, in step S2, the disk drive 30 and the STR 60 start sending and receiving stream data and commands in the form of isochronous packets and asynchronous packets.

In this case, since the disk drive 30 is not playing back data, stream data without real data is sent from the disk drive 30 to the STR 60.

Upon receiving the empty data by the STR 60, in step S3, the STR 60 requests the disk drive 30 to conduct authentication, as discussed in step S103 of Fig. 22.

In step S4, based on this authentication request, authentication is conducted between the STR 60 and the disk drive 30, and when this authentication processing has succeeded, decryption information is sent from the disk drive 30 to the STR 60.

Then, if encrypted streams, for example, SACD data, are sent from the disk drive 30 in step S5, the STR 60 immediately decrypts and outputs the encrypted streams in step S6 since the decryption information has been obtained.

As described above, upon establishing connection, the STR 60 can detect stream data sent from the disk drive 30 regardless of the type of data. Upon detecting stream data, the STR 60 can request the disk drive 30 to conduct authentication.

As stated above, in most cases, stream data received upon establishing connection is empty stream data. Accordingly, in this embodiment, the STR 60 has already finished authentication with the disk drive 30 and has obtained decryption information before receiving real data.

Thus, in most cases, the STR 60 can obtain decryption information before receiving encrypted streams from the disk drive 30 so that it can immediately decrypt when receiving encrypted streams.

The foregoing embodiment has been discussed mainly in the context of the STR 60. However, the present invention can be applied to other types of receiving apparatuses.

For example, the receiving apparatus and the receiving method of the present invention can be applied to the disk drive 30, the first devices 100, and the second devices 110 shown in Fig. 1.

## Claims

1. A receiving apparatus comprising:
receiving means for receiving stream data from an external electronic device via a data bus;
authentication request means for sending an authentication request to the external electronic device upon receiving the stream data from the external electronic device by the receiving means; and
decryption information obtaining means for obtaining information for decrypting the stream data sent from the external electronic device in response to the authentication request when the stream data is encrypted.

2. A receiving method for receiving encrypted stream data sent from an external electronic device via a data bus, comprising:
an authentication request step of sending an authentication request to the external electronic device upon receiving the encrypted stream data from the external electronic device; and
a decryption information obtaining step of obtaining information for decrypting the encrypted stream data sent from the external electronic device in response to the authentication request.
